# EUROPEAN PATENT SPECIFICATION

(11) **EP 3 909 349 B1**
(45) Date of publication and mention of the grant of the patent: **24.04.2024**
(21) Application number: 20702512.3
(22) Date of filing: 11.01.2020
(51) Int. Cl.: H04L 47/78, H04W 72/20

(54) **INTEGRATED ACCESS AND BACKHAUL DISTRIBUTED UNIT SOFT RESOURCES**
WEICHE RESSOURCEN EINER VERTEILTEN INTEGRIERTEN ZUGANGS- UND BACKHAUL-EINHEIT
RESSOURCES CONDITIONNELLES D'UNITÉ DISTRIBUÉE PAR ACCÈS ET AMENÉE INTÉGRÉS

(30) Priority: 11.01.2019 US 201962791656 P
(43) Date of publication of application: 17.11.2021
(73) Proprietor: Telefonaktiebolaget LM Ericsson (publ), 164 83 Stockholm (SE)
(72) Inventor: HUANG, Yezi, 183 39 Täby (SE); DAHLMAN, Erik, 112 23 Stockholm (SE); DORTSCHY, Boris, 129 31 Hägersten (SE)
(74) Representative: Zacco Sweden AB
(86) International application number: PCT/IB2020/050204
(87) International publication number: WO 2020/144656

(56) References cited:
- US-A1- 2019 014 533
- QUALCOMM INCORPORATED: "Resource Management in IAB Network", 3GPP DRAFT; R1-1813419, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, US; 20181112 - 20181116 11 November 2018 (2018-11-11), XP051555458, Retrieved from the Internet: URL:http://www.3gpp.org/ftp/Meetings%5F3GP P%5FSYNC/RAN1/Docs/R1%2D1813419%2Ezip [retrieved on 2018-11-11]
- "3rd Generation Partnership Project; Technical Specification Group Radio Access Network; NR; Study on Integrated Access and Backhaul; (Release 16)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.0.0, 10 January 2019 (2019-01-10), pages 1-111, XP051591643, [retrieved on 2019-01-10]
- ERICSSON: "IAB semi-static configuration for DU resources", 3GPP DRAFT; R1-1900732, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei, Taiwan; 20190121 - 20190125 20 January 2019 (2019-01-20), XP051593579, Retrieved from the Internet: URL:http://www.3gpp.org/ftp/Meetings%5F3GP P%5FSYNC/RAN1/Docs/R1%2D1900732%2Ezip [retrieved on 2019-01-20]

## Description

### RELATED APPLICATIONS

This application claims the benefit of U.S. Provisional Patent Application No. 62/791,656, filed January 11, 2019 and entitled "OPERATIONS REGARDING INTEGRATED ACCESS AND BACKHAUL DISTRIBUTED UNIT SOFT RESOURCES".

### TECHNICAL FIELD

This disclosure relates to generally to the field of cellular telecommunications. More specifically, this disclosure relates to integrated access and backhaul nodes in cellular telecommunications networks.

### BACKGROUND

This section provides an overview of the status of Integrated Access and Backhaul (IAB) in 3GPP. Densification via the deployment of more and more base stations (macro or micro base stations) is one of the mechanisms that can be employed to satisfy the ever-increasing demand for more and more bandwidth/capacity in mobile networks. Due to the availability of more spectrum in the millimeter wave (MMW) band, deploying small cells that operate in this band is an attractive deployment option for these purposes. However, deploying fiber to these small cells, which is the usual way in which small cells are deployed, can end up being very expensive and impractical. Thus, employing a wireless link for connecting the small cells to the operator's network may be a cheaper and practical alternative. One such solution is an Integrated Access and Backhaul (IAB) network, where the operator can utilize part of the radio resources for the backhaul link.

Integrated Access and Backhaul has been studied earlier in 3GPP in the scope of Long Term Evolution (LTE) Rel-10. In that work, an architecture was adopted where a Relay Node (RN) has the functionality of an LTE eNB and a user equipment (UE) modem. The RN is connected to a donor eNB which has a S 1/X2 proxy functionality hiding the RN from the rest of the network. That architecture enabled the Donor eNB to also be aware of the UEs behind the RN and hide any UE mobility between Donor eNB and Relay Node on the same Donor eNB from the core network (CN). During the Rel-10 discussions, other architectures were considered, e.g. where the RNs are more transparent to the Donor gNB and allocated a separate stand-alone P/S -GW node. A document titled "Resource Management in IAB Network", 3GPP DRAFT, by QUALCOMM INCORPORATED describes a signaling enhancements for efficient resource management in IAB network. US2019/014533A1 describes method and systems for requesting resource allocation in a wireless backhaul network.

### SUMMARY

The invention is defined by the appended claims.

A method performed by an IAB node for receiving soft resource reservation or allocation from a parent node, the method comprising: sending a request for a soft resource to a parent node; if grant or denial not received from the parent node before a maximum number of sent requests is reached, sending a plurality of resource requests for the same resource(s) to the parent node,suspending the sending of the plurality of requests to a parent node for a predetermined or a determined amount of time; receiving a grant or denial of a soft resource from the parent node; when a grant is received, determining whether the IAB node is eligible for the granted soft resource; and utilizing the soft resource to communication data with the parent node via a backhaul link or with a user equipment via an access link.

The method of the previously listed embodiment, wherein the parent node is in communication with a core network via a wireline connection.

The method of any of the previously listed embodiments, wherein the IAB node is further configured for communication with a child node in accordance with the granted soft resource.

The method of any of the previously listed embodiments, wherein the IAB node and the parent node communicate using half-duplexed communication.

A method performed by a parent node for reserving soft resources for an IAB node, the method comprising: receiving a request for a soft resource sent by the IAB node; determining whether the requested resource should be granted in full, should be granted in part, or should be denied; and sending the grant or denial to the IAB node, the method further comprising:receiving multiple requests for the same resources from a plurality of IAB nodes,deciding to grant said resource(s) in question to one, part or all of the IAB nodes that have sent a resource request; wherein the decision to grant said resources is based on a condition that whether the IAB node is committed to receive said resources from the parent node on the parent link during a certain period of time;sending the grant or denial to the IAB node(s) based on the availability of the resources for the respective nodes, if the parent node determines to release the resource(s) in question to one, some, or all of the IAB nodes that have sent a resource request.

A network node having a memory and a processing device, wherein the processing device executes instructions, stored on the memory, that cause the processor to perform any of the methods of the previously listed embodiments. [0014] A computer readable storage medium having instructions thereon that, when executed by a processing device of a network node, cause the network node to perform any of the methods of the previously listed embodiments.

### BRIEF DESCRIPTION OF THE DRAWINGS

The present disclosure includes the following figures:
FIG. 1 depicts a multi-hop deployment in an integrated access and backhaul (IAB) network.
FIG. 2 depicts an IAB configuration and includes IAB terminologies for adjacent hops.
FIG. 3a is a reference diagram for an IAB architecture.
FIG. 3b shows two examples of F1*-U protocol stacks.
FIGS. 4a and 4b depict examples for spanning tree and directed acyclic graph configurations, respectively.
FIGS. 5a, 5b, and 5c present diagrammatic examples of link and route redundancy in DAG.
FIGS. 6a, 6b, 6c, and 6d show exemplary route redundancy in architecture group 1 either using a single MT function (6a and 6b) or multiple MT functions (6c and 6d).
FIG. 7A is a flowchart of a method for soft resource reservation or allocation to an IAB node, according to some embodiments of the present disclosure.
FIG. 7B is a flowchart of a method for soft resource reservation or allocation to an IAB node by a parent node.
FIG. 8 depicts a wireless network.
FIG. 9 depicts a user equipment.
FIG. 10 depicts a virtualization environment.
FIG. 11 depicts a network connected via an intermediate network to a host computer in accordance with some embodiments.
FIG. 12 depicts a host computer communicating via a base station with a user equipment over a partially wireless connection.
FIG. 13 depicts a flowchart of a method implemented in a communication system including a host computer, a base station and a user equipment.
FIG. 14 depicts a flowchart of a method implemented in a communication system including a host computer, a base station and a user equipment.
FIG. 15 depicts a flowchart of a method implemented in a communication system including a host computer, a base station and a user equipment.
FIG. 16 depicts a flowchart of a method implemented in a communication system including a host computer, a base station and a user equipment.

These figures will be better understood by reference to the following detailed description.

### DETAILED DESCRIPTION

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

For New Radio (NR), one potential difference compared to LTE (besides lower layer differences) is that a gNB-CU/DU (Centralized Unit/Distributed Unit) split is defined for NR, which allows for a separation of time critical RLC/MAC/PHY protocols from less time critical RRC/PDCP protocols. Such a split could also be applied for the IAB case. Other differences anticipated in NR as compared to LTE with regards to IAB is the support of multiple hops as well as the support of redundant paths.

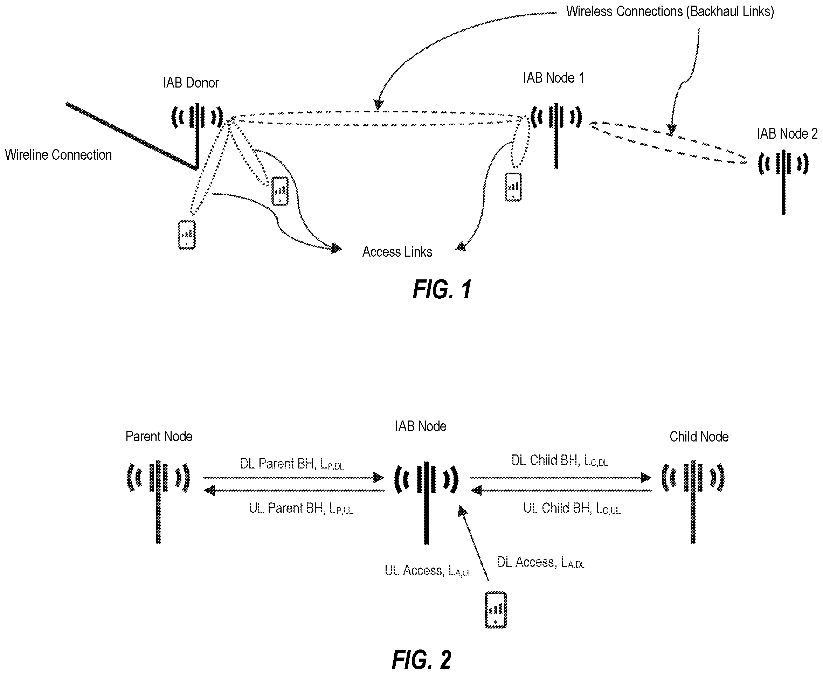

In FIG. 1, an IAB deployment is presented, in which the IAB Donor Node (sometimes referred to simply as an "IAB donor") has a wired connection to the core network (CN) and the IAB Relay Nodes (sometimes referred to simply as "IAB nodes") are wirelessly connected using NR communication to the IAB donor. This may be accomplished either directly or may be accomplished indirectly via one or more intermediate IAB nodes. The connection between IAB donor or IAB node and UEs is called an "access link," whereas the connection between two IAB nodes or between an IAB donor and an IAB node is called a "backhaul link."

As shown in FIG. 2, the adjacent upstream node which is close to the IAB donor of an IAB node is referred to as a "parent node" of the IAB node. The adjacent downstream node which is further away from the IAB donor of an IAB node is referred to as a "child node" of the IAB node. The backhaul link between the parent node and the IAB node is referred to as a "parent backhaul link" or "parent link," whereas the backhaul link between the IAB node and the child node may be referred to as a "child backhaul link" or "child link."

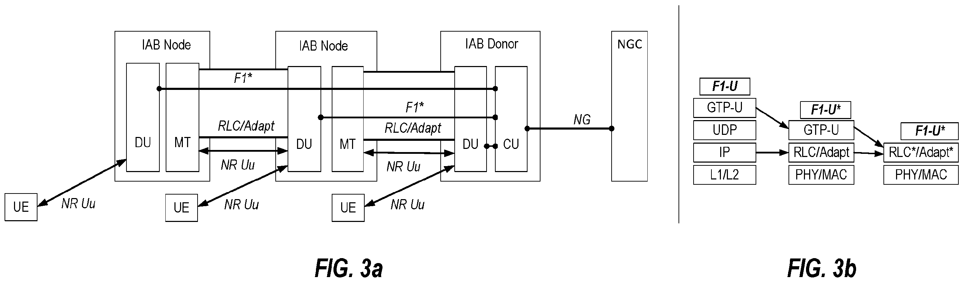

Currently in 3GPP, different architectures for supporting user plane traffic over an IAB node has been captured in 3GPP TS 38.874 (version 1.0.0). These architectures include architecture groups 1 and 2. Of these architectures, architecture group 1a may be preferable and one example is depicted in FIG. 3a. Architecture 1a leverages CU/DU-split architecture. FIG. 3a shows a reference diagram for a two-hop chain of IAB nodes underneath an IAB donor, where IAB node and UE connect in standalone mode (SA-mode) to a next generation core (NGC), such as a 5G core network.

In this architecture, each IAB node holds a distributed unit (DU) and a mobile-termination or mobile-termination function (MT). Via the MT, the IAB node connects to an upstream IAB node or the IAB donor. Via the DU, the IAB node establishes radio link control (RLC) channels to UEs and to MTs of downstream IAB nodes. For MTs, this RLC-channel may be referred to as a modified RLC*. An IAB node can connect to more than one upstream IAB node or IAB donor DU. The IAB node may contain multiple DUs, but each DU part of the IAB node has an F1-C connection with only one IAB donor CU-CP.

The IAB donor also holds a DU to support UEs and MTs of downstream IAB nodes. The IAB donor may hold a centralized unit (CU) for the DUs of all IAB nodes and for its own DU. It is assumed that the DUs on an IAB node are served by only one IAB donor. This IAB donor may change through topology adaptation. Each DU on an IAB node connects to the CU in the IAB donor using a modified form of F 1, which may be referred to as F1*. F1*-U runs over RLC channels on the wireless backhaul between the MT on the serving IAB node and the DU on the donor. An adaptation layer is added, which holds routing information, enabling hop-by-hop forwarding and replacing the IP functionality of the standard F1-stack. F 1 * - U may carry a GPRS Tunnel Protocol for User Data (GTP-U) header for the end-to-end association between CU and DU. In a further enhancement, information carried inside the GTP-U header may be included into the adaption layer. Further, optimizations to RLC may be considered such as applying ARQ only on the end-to-end connection opposed to hop-by-hop.

FIG. 3b shows two examples of such F1*-U protocol stacks. In this figure, enhancements of RLC are referred to as RLC*. The MT of each IAB node further sustains NAS connectivity to the core network (e.g., NGC) , e.g., for authentication of the IAB node. It may further sustain a PDU-session via the core network, e.g., to provide the IAB node with connectivity to the operation, administration, and management (OAM) system(s).

For non-standalone (NSA) operation with EPC, the MT is dual-connected with the network using EN-DC. The IAB node's MT sustains a PDN connection with the EPC, e.g., to provide the IAB node with connectivity to the OAM system. Details of F1*, the adaptation layer and RLC* are pending further description in 3GPP.

### Integrated Access Backhaul Architectures

Wireless backhaul links are vulnerable to blockage (e.g., due to moving objects such as vehicles), due to seasonal changes (e.g., increases or decreases in foliage), or due to infrastructure changes (e.g., new buildings). Such vulnerabilities also apply to physically stationary IAB nodes. Also, traffic variations can create uneven load distribution on wireless backhaul links leading to local link or node congestion.

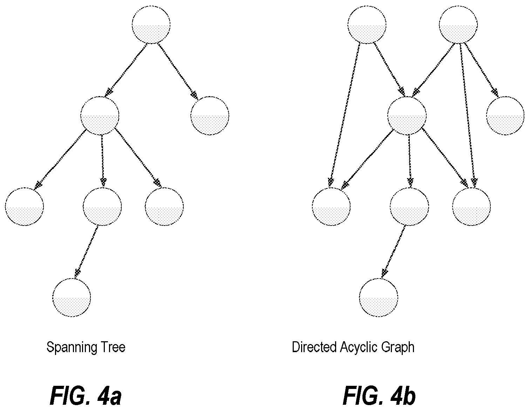

The following IAB topologies are considered in IAB and are shown in FIGS. 4a and 4b, which depicts examples for spanning tree and directed acyclic graph (DAG), in which the arrows indicate the directionality of the graph edge.
1. Spanning tree (ST)
2. Directed acyclic graph (DAG)

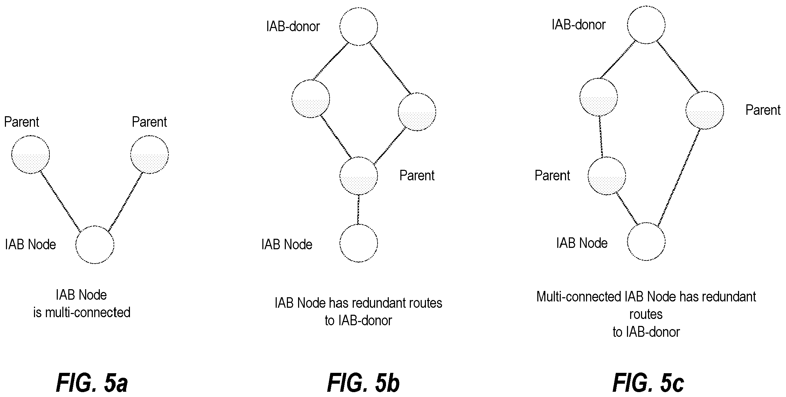

One way to provide robust operation for physically fixed relays is to provide redundant links to two or more parent nodes as shown in FIGS. 5a, 5b, and 5c, which present diagrammatic examples of link and route redundancy in DAG. For DAG, the following options can be considered:
- The IAB node is multi-connected, i.e., it has links to multiple parent nodes (FIG. 5a).
- The IAB node has multiple routes to another node, e.g. the IAB donor (FIG. 5b).
- Both options can be combined, i.e., the IAB node may have redundant routes to another node via multiple parents (FIG. 5c).

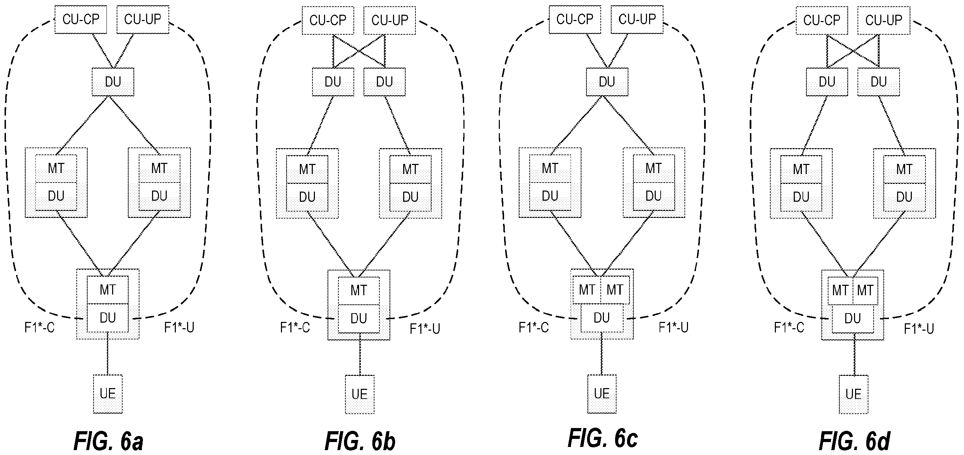

Multi-connectivity or route redundancy may be used for back-up purposes. It is also possible that redundant routes are used concurrently, e.g., to achieve load balancing, reliability, etc. FIGS. 6a, 6b, 6c, and 6d show exemplary route redundancy in architecture group 1 either using single MT function or multiple MT functions.

### Resource Coordination

From an IAB node MT point-of-view, as in Rel. 15, the following time-domain resources can be indicated for the parent link:
- Downlink time resource
- Uplink time resource
- Flexible time resource

From a IAB node DU point-of-view, the child link has the following types of time resources:
- Downlink time resource
- Uplink time resource
- Flexible time resource
- Not available time resources (resources not to be used for communication on the DU child links)

Each of the downlink, uplink, and flexible time-resource types of the DU child link can belong to one of two categories:
- Hard: The corresponding time resource is always available for the DU child link
- Soft: The availability of the corresponding time resource for the DU child link is explicitly and/or implicitly controlled by the parent node.

An IAB node is configured with IAB node specific resources in time available for the links. Mechanisms for scheduling coordination, resource allocation, and route selection across IAB nodes/IAB donors and multiple backhaul hops were studied in 3GPP TR 38.874 V1.0.0 (2018-12), Study on Integrated Access and Backhaul, including the following aspects:
- Distributed or centralized coordination mechanisms
- Resource granularity, adaptation period, and enhancements to existing mechanisms for the required signaling (e.g. slot or symbol-level or TDD configuration pattern) provided to the IAB node
- Explicit or implicit indication of the resources
- Exchange of L1 and/or L3 measurements between IAB nodes
- Exchange of topology related information (e.g. hop order) impacting the study of the backhaul link physical layer design
- Resource (frequency, time in terms of slot/slot format, etc.) coordination which is faster than semi-static coordination and the indication of resources within the configuration which can be dynamically and flexibly used for different links, including:
   ∘ The need to consider the scheduling delay, IAB node processing delays, or information required to be available for the use of flexible resources
   ∘ Mechanisms to schedule flexible resources (e.g. GC-PDCCH)

In order to support mechanisms for resource allocation for IAB nodes, semi-static configuration is supported for the configuration of IAB node DU resources. In addition, dynamic indication (L1 signaling) to an IAB node of the availability of soft resources for an IAB node DU is supported. Existing Rel.15 L1 signaling methods as the baseline, while potential enhancements (e.g. new slot formats), rules for DU/MT behavior in case of conflicts across multiple hops, and processing time constraints at the IAB node may need to be considered, according to 3GPP TR 38.874 V1.0.0 (2018-12), Study on Integrated Access and Backhaul.

Table 1 and Table 2, included below, capture the possible combinations of DU and MT behavior. The tables assume an IAB not capable of full-duplex operation. In the tables below the following definitions apply:
- "MT: Tx" means that the MT should transmit if scheduled;
- "DU: Tx" means that the DU may transmit;
- "MT: Rx" means that the MT should be able to receive (if there is anything to receive);
- "DU: Rx" means that the DU may schedule uplink transmissions from child nodes or UEs;
- "MT: Tx/Rx" means that the MT should transmit if scheduled and should be able to receive, but not simultaneously;
- "DU: Tx/Rx" means that the DU may transmit and may schedule uplink transmission from child nodes and UEs, but not simultaneously;
- "IA" means that the DU resource is explicitly or implicitly indicated as available;
- "INA" means that the DU resource is explicitly or implicitly indicated as not available;
- "MT: NULL" means that the MT does not transmit and does not have to be able to receive;
- "DU: NULL" means that the DU does not transmit and does not schedule uplink transmission from child nodes and UEs.

Table 1 applies in case of TDM operation, where there can be no simultaneous transmission in the DU and the MT, nor any simultaneous reception in the DU and the MT.

**Table 1: DU and MT behavior in case of TDM operation**

| **DU Configuration** | **MT configuration** | | |
|---|---|---|---|
| | **DL** | **UL** | **F** |
| DL-H | DU: Tx | DU: Tx | DU: Tx |
| | MT: NULL | MT: NULL | MT: NULL |
| DL-S | When DU resource: IA | When DU resource: IA DU: Tx | When DU resource: IA |
| | DU: Tx | MT: NULL | DU: Tx |
| | MT: NULL | | MT: NULL |
| | When DU resource: INA | When DU resource: INA | When DU resource: INA |
| | | DU: NULL | |
| | DU: NULL | MT: Tx | DU: NULL |
| | MT: Rx | | MT: Tx/Rx |
| UL-H | DU: Rx | DU: Rx | DU: Rx |
| | MT: NULL | MT: NULL | MT: NULL |
| UL-S | When DU resource: IA | When DU resource: IA DU: Rx | When DU resource: IA |
| | DU: Rx | MT: NULL | DU: Rx |
| | MT: NULL | | MT: NULL |
| | When DU resource: INA | When DU resource: INA | When DU resource: INA |
| | | DU: NULL | |
| | DU: NULL | MT: Tx | DU: NULL |
| | MT: Rx | | MT: Tx/Rx |
| F-H | DU: Tx/Rx | DU: Tx/Rx | DU: Tx/Rx |
| | MT: NULL | MT: NULL | MT: NULL |
| F-S | When DU resource: IA | When DU resource: IA DU: Tx/Rx | When DU resource: IA |
| | DU: Tx/Rx | MT: NULL | DU: Tx/Rx |
| | MT: NULL | | MT: NULL |
| | When DU resource: INA | When DU resource: INA | When DU resource: INA |
| | | DU: NULL | |
| | DU: NULL | MT: Tx | DU: NULL |
| | MT: Rx | | MT: Tx/Rx |
| NA | DU: NULL | DU: NULL | DU: NULL |
| | MT: Rx | MT: Tx | MT: Tx/Rx |

Table 2 applies in case of SDM operation, where there can be simultaneous transmission in the DU and the MT, alternatively simultaneous reception in the DU and the MT.

**Table 2: DU and MT behavior in case of SDM operation**

| | **DL** | **UL** | **F** |
|---|---|---|---|
| DL-H | DU: Tx | DU: Tx | DU: Tx |
| | MT: NULL | MT: Tx | MT: Tx |
| DL-S | When DU resource: | When DU resource: IA | When DU resource: IA |
| | IA | DU: Tx | DU: Tx |
| | DU: Tx | MT: Tx | MT: Tx |
| | MT: NULL | | |
| | When DU resource: INA | When DU resource: INA DU: NULL | When DU resource: INA |
| | | MT: Tx | DU: NULL |
| | DU: NULL | | MT: Tx/Rx |
| | MT: Rx | | |
| UL-H | DU: Rx | DU: Rx | DU: Rx |
| | MT: Rx | MT: NULL | MT: Rx |
| UL-S | When DU resource: IA | When DU resource: IA | When DU resource: IA |
| | | DU: Rx | DU: Rx (only if MT is Rx and the DU knows that ahead of time) |
| | DU: Rx | MT: NULL | |
| | MT: Rx | | |
| | | When DU resource: INA | MT: Rx |
| | When DU resource: INA | DU: NULL | |
| | | MT: Tx | When DU resource: INA |
| | DU: NULL | | |
| | MT: Rx | | DU: NULL |
| | | | MT: Tx/Rx |
| F-H | DU: Tx/Rx | DU: Tx/Rx | DU: Tx/Rx |
| | MT: Rx (only if DU is Rx and the parent DU is aware in advance) | MT: Tx (only if DU is Tx and the parent is aware in advance) | MT: Tx (only if DU is Tx and the parent DU knows that ahead of time), Rx (only if DU is Rx and the parent DU is aware in advance) |
| F-S | When DU resource: IA | When DU resource: IA | When DU resource: IA |
| | | DU: Tx/Rx | DU: Tx/Rx |
| | DU: Tx/Rx | MT: Tx (only if DU is Tx and the parent DU is aware in advance) | MT: Tx (only if DU is Tx and the parent DU knows that ahead of time), Rx (only if DU is Rx and the parent DU is aware in advance) |
| | MT: Rx (only if DU is Rx and the parent DU is aware in advance) | | |
| | | When DU resource: INA | |
| | When DU resource: INA | DU: NULL | |
| | | MT: Tx | |
| | DU: NULL | | |
| | MT: Rx | | When DU resource: INA |
| | | | DU: NULL |
| | | | MT: Tx/Rx |
| NA | DU: NULL | DU: NULL | DU: NULL |
| | MT: Rx | MT: Tx | MT: Tx/Rx |

There currently exist certain challenge(s). To coordinate different resource partitions between IAB nodes that are under the same IAB donor, semi-static configuration signalled from the IAB donor CU is needed, especially when the IAB nodes only operate in half-duplexing mode. However, the traditional way of assigning DL/UL/Flexible resource types, as a gNB configures a UE or device, does not consider the dynamic and interaction between, e.g., topologically adjacent IAB nodes. In some IAB topologies, IAB nodes could gain capacity using time/frequency resources that are potentially shared between them, but they have no control about IAB soft-resources. Efficient strategies and schemes for the coordination and assignment of IAB soft-resources are not identified in 3GPP TR 38.874 V1.0.0 (2018-12), Study on Integrated Access and Backhaul.

Certain aspects of the present disclosure and their embodiments may provide solutions to these or other challenges. The availability of the soft resources assigned to the IAB DU is controlled by the parent node. This invention defines two schemes for the interaction between an IAB node and a parent node for acquiring the resources, which is assigned to be soft resources. The first scheme is initiated by the IAB node, which is semi-statically assigned with soft resource(s) and would like to use it. The second scheme is initiated by the parent node by actively providing information about resource availability.

There are, proposed herein, various embodiments which address one or more of the issues disclosed herein.

In one embodiment, a method includes operations in which an IAB node may send a request for soft resources to a parent node. The IAB node may resend the request if no grant or denial is received from the parent node. The IAB node may receive a grant or denial from the parent node. The IAB node may determine whether it is able to comply with any conditions included in the grant from the parent node, and thus determine whether it is eligible to exercise the grant and utilize the associated resources. The IAB node uses the resource or resources requested on a child access link and/or a backhaul link. In another exemplary method, the parent node receives the request or requests previously sent by the IAB node. The parent node determines whether the requested resource or resources should be granted in full, partially granted, or denied. The parent node sends the grant or denial to the IAB node. The parent node may adjust its own usage of resources available to it.

In another embodiment, the parent node evaluates its own resource utilization. In the event that the parent node determines that some of its resources can be redeployed to connected IAB notes, the parent node sends notification advertising the availability of one or more resources. The parent node receives confirmation or acknowledgment of usage from one or more IAB nodes. The parent node may adjust its own usage of resources. Additionally, the IAB node may receive a notification indicating the availability of one or more resources and evaluates the ability to utilize the available resources according to any conditions placed upon those resources. The IAB node may send confirmation or acknowledgment of the resource or resources that it will use. The IAB node may send confirmation or acknowledgment regarding some available resources but not other available resources in some instances. The IAB node may use the confirmed or acknowledged resource(s) on one or more child access or backhaul links.

Certain embodiments may provide one or more of the following technical advantage(s). The solution provides high flexibility to share the semi-statically assigned soft resources between parent and IAB nodes in an efficient and controlled manner. Different schemes may be suitable for different traffic conditions at the parent node and the IAB node, respectively. The first scheme facilitates the parent node, since it does not need to evaluate the resource condition on the parent link unless requested by the IAB node. The second scheme facilitates the IAB node as the information on resource availability is already provided when it needs to use the resource, so the IAB node does not need to wait for the whole request-and-grant cycle before using the resources.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The soft resources are the special factor of the semi-static configuration for IAB DU, which adds dynamicity to the otherwise semi-static settings. There are cases that the initial status of the soft resource assigned to an IAB DU is *not available* for the DL/UL transmission on its child access/backhaul links unless explicitly indicated as available by the parent node. For example, both MT and DU of a half-duplexing IAB node are assigned with DL resources while the DU part is assigned with DL soft resources. Since the IAB MT is reserved for receiving DL transmission on the parent backhaul link, the IAB node cannot use the DL-soft resource on its child links by default. If the IAB node needs to use the resource for the DL transmission on child links, it should obtain the resource-availability indication from the parent node. To serve this purpose, this invention proposes two schemes. The first scheme is initiated by the IAB node, which is semi-statically assigned with soft resource(s) and would like to use it. The second scheme is initiated by parent node by actively providing information about resource availability.

### Scheme Initiated by the IAB Node

In the first scheme, when an IAB node is assigned with soft resource(s) and would like to use the resource(s) for DL or UL transmission on the child backhaul and/or access link(s), the IAB node will send a resource request to the parent node. The request contains at least the node identity and the identification or information of the resource(s) in question. The IAB node sends a plurality of resource requests for the same resource(s) if it does not receive grant or denial from the parent node before a maximum number of sent requests is reached. Thereafter, the IAB node suspends sending requests for a predetermined or a determined amount of time.

According to an embodiment, a resource request from the IAB node can further include additional information or conditions such as data priority or level of urgency, DL/UL buffer status information, the duration for which the resources are requested, which can be part of the semi-statically assigned resource(s), planned transmission direction for the requested resources, minimum and maximum amount of time/frequency resources, etc.

Upon receiving the resource request, potentially including additional information, from the IAB node, the parent node will determine if it will grant the resource or not. The decision can be made based on the information associate with the received request. If the parent node receives multiple request for the same resources from a plurality of IAB nodes, the parent node decides to grant the resource(s) in question to one, part or all of the IAB nodes that have sent a resource request.

According to an embodiment, the resource grant from the parent node can be conditional. For example, the parent node can tell the IAB node(s) that the IAB node(s) can use the resource(s) in question on the IAB node's child access/backhaul links if the IAB node can guarantee or is committed to receiving the DL from the parent node on the parent link during a certain period of time.

If the parent node determines to release the resource(s) in question to one, some, or all of the IAB nodes that have sent a resource request, the parent node will send the grant accordingly. According to an embodiment, the parent node may also send a denial to the IAB node(s) that have sent the resource request if the resource(s) in question is not available for the respective nodes.

After granting the resource(s) in question to one or a plurality of IAB nodes, the parent may adjust its own usage of the resource(s) in question accordingly if needed.

Upon receiving the resource grant from the parent node, the IAB node can use the resource(s) in question for the DL or UL transmission on its child access/backhaul link(s). If the grant by the parent is conditional, the IAB node checks that it can comply with the condition(s). If this check turns out positive the IAB node can use the resource(s) in question for the DL or UL transmission on its child access/backhaul link(s) respecting the condition(s).

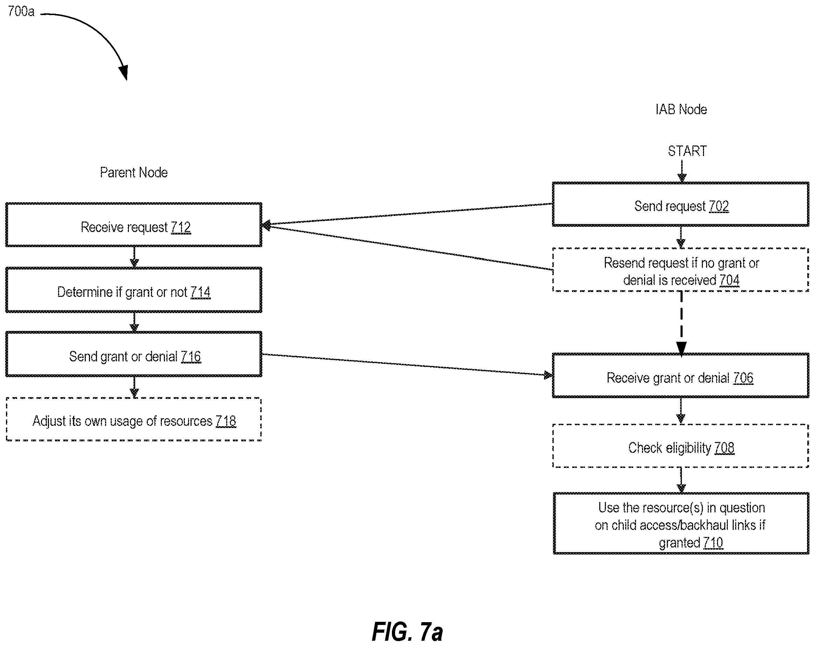

A method 700a of this scheme is depicted in the flowchart shown in FIG. 7a. The method 700a includes a plurality of enumerated steps or operations that can be performed in some embodiments of the present disclosure in order to allocate soft resources to an IAB node. Embodiments of the method 700a may include additional or alternative operations before, after, in between, or as part of the enumerated operations shown in FIG. 7a.

Additionally, some embodiments of the present disclosure may include a network node having memory and a processor, and which the processor may execute instructions stored on the memory such that the processor performs one or more of the operations included in embodiments of the method 700a. Additionally, some embodiments of the method 700a may include a computer readable medium having instructions stored thereon that when executed cause the processing device of, e.g., an IAB donor, an IAB node, a parent node, a child node, to perform one or more of the operations of the method 700a.

Accordingly, at operation 702 an IAB node sends a request for soft resources to a parent node. At operation 704, the IAB node resends the request if no grant or denial is received from the parent node. At operation 706, the IAB node receives a grant or denial from the parent node. At operation 708, the IAB node determines whether it is able to comply with any conditions included in the grant from the parent node, and thus determine whether it is eligible to exercise the grant and utilize the associated resources. At operation 710, the IAB node uses the resource or resources requested on a child access link and/or a backhaul link. The operations 702, 704, 706, 708, and 710 are associated (e.g., may be performed by) the IAB node. The method 700a further includes operations associated with the parent node.

Accordingly, the method 700a may include an operation 712 in which the parent node receives the request or requests sent by the IAB node in operations 702 and/or 704. In operation 714, the parent node determines whether the requested resource or resources should be granted in full, partially granted, or denied. At operation 716, the parent node sends the grant or denial to the IAB node. In some embodiments, depending on the resources, the parent node adjusts its own usage of resources available to it, at operation 718.

### Scheme Initiated by the Parent Node

In the second scheme, the parent node periodically or aperiodically evaluates its resource utilization conditions and sends notification to the IAB node(s) that are connected to the parent node when some resources can be released or shared from the parent node. The notification contains at least the identification or information of the resource(s) in question.

According to an embodiment, the notification from the parent node further includes additional information, such as duration of the provided resources, which can be part of the semi-statically assigned resource(s).

According to another embodiment, the notification from the parent node about resources that could be released can further include conditions. For example, the parent node can tell the IAB node(s) that the IAB node(s) can use the resource in question on the IAB node's child access/backhaul links if the IAB node can guarantee receiving the DL from the parent node on the parent link during a certain period of time. Another example is to include the eligible data priority or urgency level, eligible DL/UL buffer status, etc., for using the provided resource(s).

The IAB node(s) that are connected to the parent node receives the notification from the parent node. When the IAB node would like to use the assigned soft resource(s) while the resource(s) in question is provided as available according to the received notification from the parent node, the IAB node will evaluate its eligibility for using the resource(s) in question. If it is eligible, the IAB node will send back a confirmation or acknowledgement to the parent about the usage of the resource(s) in question. The confirmation or acknowledgement contains at least node identity and the identification or information of the resource(s) that will be used by the IAB node. The IAB node will then use the resource(s) in question for the DL or UL transmission on its child access/backhaul link(s).

Upon receiving the confirmation or acknowledgement about the usage of certain resource(s) from one or a plurality of IAB nodes that are connected to the parent node, the parent may adjust its own usage of the resource(s) in question accordingly if needed.

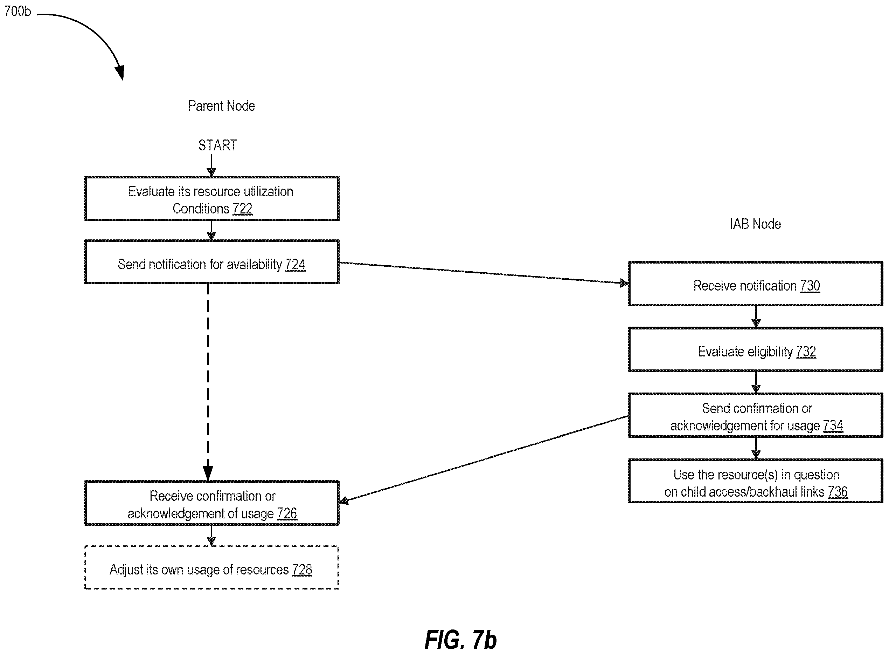

A corresponding method 700b is depicted by the flowchart of the second scheme as shown in FIG. 7b. As with the method 700a, the method 700b may include additional and/or alternative operations in some embodiments. As depicted, the method 700b includes IAB node operations and parent node operations. In some embodiments, these operations may be understood as separate methods. Additionally, some embodiments of the present disclosure may include a network node having memory and a processor, and which the processor may execute instructions stored on the memory such that the processor performs one or more of the operations included in embodiments of the method 700b. Additionally, some embodiments of the method 700b may include a computer readable medium having instructions stored thereon that when executed cause the processing device of, e.g., an IAB donor, an IAB node, a parent node, a child node, to perform one or more of the operations of the method 700b.

As depicted, the method 700b includes an operation 722 in which the parent node evaluates its own resource utilization. In the event that the parent node determines that some of its resources can be redeployed to connected IAB nodes, the parent node sends notification advertising the availability of one or more resources at operation 724. At an operation 726, the parent node receives confirmation or acknowledgment of usage from one or more IAB nodes. In some embodiments, the parent node adjusts its own usage of resources at an operation 728. The operations 722, 724, 726, and 728 may be performed by a parent node. Embodiments of the method 700b may include operations performed by an associated IAB node or these operations may be understood as a separate method.

As shown in FIG. 7b, the IAB node may receive a notification, in operation 730, indicating the availability of one or more resources and evaluates the ability to utilize the available resources according to any conditions placed upon those resources, at an operation 732. At an operation 734, the IAB node may send confirmation or acknowledgment of the resource or resources that it will use. The IAB node may send confirmation or acknowledgment regarding some available resources but not other available resources in some instances. At an operation 736, the IAB node may use the resource or resources, as confirmed or acknowledged in the operation 734, on child access or backhaul links.

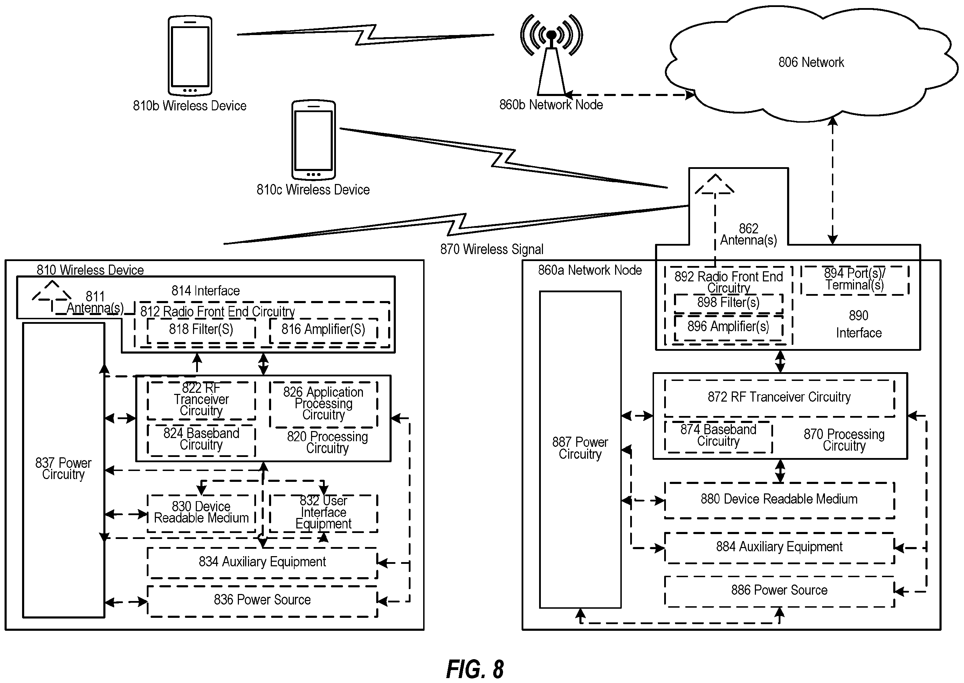

Although the subject matter described herein may be implemented in any appropriate type of system using any suitable components, the embodiments disclosed herein are described in relation to a wireless network, such as the example wireless network illustrated in FIG. 8. For simplicity, the wireless network of FIG. 8 only depicts network 806, network nodes 860a and 860b (referred to interchangeably as "network node 860"), and wireless devices (WDs) 810, 810b, and 810c (referred to interchangeably as "WD 810"). The network node 860 may be an IAB donor, an IAB node, a parent node, or a child node, as described herein. In practice, a wireless network may further include any additional elements suitable to support communication between wireless devices or between a wireless device and another communication device, such as a landline telephone, a service provider, or any other network node or end device. Of the illustrated components, network node 860 and wireless device (WD) 810 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 806 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 860 and WD 810 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multistandard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIG. 8, network node 860 includes processing circuitry 870, device readable medium 880, interface 890, auxiliary equipment 884, power source 886, power circuitry 887, and antenna 862. Although network node 860 illustrated in the example wireless network of FIG. 8 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 860 are depicted as single boxes located within a larger box, or nested within multiple boxes, in practice, a network node may comprise multiple different physical components that make up a single illustrated component (e.g., device readable medium 880 may comprise multiple separate hard drives as well as multiple RAM modules).

Similarly, network node 860 may be composed of multiple physically separate components (e.g., aNodeB component and a RNC component, or a BTS component and a BSC component, etc.), which may each have their own respective components. In certain scenarios in which network node 860 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 860 may be configured to support multiple radio access technologies (RATs). In such embodiments, some components may be duplicated (e.g., separate device readable medium 880 for the different RATs) and some components may be reused (e.g., the same antenna 862 may be shared by the RATs). Network node 860 may also include multiple sets of the various illustrated components for different wireless technologies integrated into network node 860, such as, for example, GSM, WCDMA, LTE, NR, WiFi, or Bluetooth wireless technologies. These wireless technologies may be integrated into the same or different chip or set of chips and other components within network node 860.

Processing circuitry 870 is configured to perform any determining, calculating, or similar operations (e.g., certain obtaining operations) described herein as being provided by a network node. These operations performed by processing circuitry 870 may include processing information obtained by processing circuitry 870 by, for example, converting the obtained information into other information, comparing the obtained information or converted information to information stored in the network node, and/or performing one or more operations based on the obtained information or converted information, and as a result of said processing making a determination.

Processing circuitry 870 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 860 components, such as device readable medium 880, network node 860 functionality. For example, processing circuitry 870 may execute instructions stored in device readable medium 880 or in memory within processing circuitry 870. Such functionality may include providing any of the various wireless features, functions, or benefits discussed herein. In some embodiments, processing circuitry 870 may include a system on a chip (SOC).

In some embodiments, processing circuitry 870 may include one or more of radio frequency (RF) transceiver circuitry 872 and baseband processing circuitry 874. In some embodiments, radio frequency (RF) transceiver circuitry 872 and baseband processing circuitry 874 may be on separate chips (or sets of chips), boards, or units, such as radio units and digital units. In alternative embodiments, part or all of RF transceiver circuitry 872 and baseband processing circuitry 874 may be on the same chip or set of chips, boards, or units

In certain embodiments, some or all of the functionality described herein as being provided by a network node, base station, eNB or other such network device may be performed by processing circuitry 870 executing instructions stored on device readable medium 880 or memory within processing circuitry 870. In alternative embodiments, some or all of the functionality may be provided by processing circuitry 870 without executing instructions stored on a separate or discrete device readable medium, such as in a hard-wired manner. In any of those embodiments, whether executing instructions stored on a device readable storage medium or not, processing circuitry 870 can be configured to perform the described functionality. The benefits provided by such functionality are not limited to processing circuitry 870 alone or to other components of network node 860, but are enjoyed by network node 860 as a whole, and/or by end users and the wireless network generally.

Device readable medium 880 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 870. Device readable medium 880 may store any suitable instructions, data or information, including a computer program, software, an application including one or more of logic, rules, code, tables, etc. and/or other instructions capable of being executed by processing circuitry 870 and, utilized by network node 860. Device readable medium 880 may be used to store any calculations made by processing circuitry 870 and/or any data received via interface 890. In some embodiments, processing circuitry 870 and device readable medium 880 may be considered to be integrated.

Interface 890 is used in the wired or wireless communication of signalling and/or data between network node 860, network 806, and/or WDs 810. As illustrated, interface 890 comprises port(s)/terminal(s) 894 to send and receive data, for example to and from network 806 over a wired connection. Interface 890 also includes radio front end circuitry 892 that may be coupled to, or in certain embodiments a part of, antenna 862. Radio front end circuitry 892 comprises filters 898 and amplifiers 896. Radio front end circuitry 892 may be connected to antenna 862 and processing circuitry 870. Radio front end circuitry may be configured to condition signals communicated between antenna 862 and processing circuitry 870. Radio front end circuitry 892 may receive digital data that is to be sent out to other network nodes or WDs via a wireless connection. Radio front end circuitry 892 may convert the digital data into a radio signal having the appropriate channel and bandwidth parameters using a combination of filters 898 and/or amplifiers 896. The radio signal may then be transmitted via antenna 862. Similarly, when receiving data, antenna 862 may collect radio signals which are then converted into digital data by radio front end circuitry 892. The digital data may be passed to processing circuitry 870. In other embodiments, the interface may comprise different components and/or different combinations of components.

In certain alternative embodiments, network node 860 may not include separate radio front end circuitry 892, instead, processing circuitry 870 may comprise radio front end circuitry and may be connected to antenna 862 without separate radio front end circuitry 892. Similarly, in some embodiments, all or some of RF transceiver circuitry 872 may be considered a part of interface 890. In still other embodiments, interface 890 may include one or more ports or terminals 894, radio front end circuitry 892, and RF transceiver circuitry 872, as part of a radio unit (not shown), and interface 890 may communicate with baseband processing circuitry 874, which is part of a digital unit (not shown).

Antenna 862 may include one or more antennas, or antenna arrays, configured to send and/or receive wireless signals. Antenna 862 may be coupled to radio front end circuitry 890 and may be any type of antenna capable of transmitting and receiving data and/or signals wirelessly. In some embodiments, antenna 862 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 862 may be separate from network node 860 and may be connectable to network node 860 through an interface or port.

Antenna 862, interface 890, and/or processing circuitry 870 may be configured to perform any receiving operations and/or certain obtaining operations described herein as being performed by a network node. Any information, data and/or signals may be received from a wireless device, another network node and/or any other network equipment. Similarly, antenna 862, interface 890, and/or processing circuitry 870 may be configured to perform any transmitting operations described herein as being performed by a network node. Any information, data and/or signals may be transmitted to a wireless device, another network node and/or any other network equipment.

Power circuitry 887 may comprise, or be coupled to, power management circuitry and is configured to supply the components of network node 860 with power for performing the functionality described herein. Power circuitry 887 may receive power from power source 886. Power source 886 and/or power circuitry 887 may be configured to provide power to the various components of network node 860 in a form suitable for the respective components (e.g., at a voltage and current level needed for each respective component). Power source 886 may either be included in, or external to, power circuitry 887 and/or network node 860. For example, network node 860 may be connectable to an external power source (e.g., an electricity outlet) via an input circuitry or interface such as an electrical cable, whereby the external power source supplies power to power circuitry 887. As a further example, power source 886 may comprise a source of power in the form of a battery or battery pack which is connected to, or integrated in, power circuitry 887. The battery may provide backup power should the external power source fail. Other types of power sources, such as photovoltaic devices, may also be used.

Alternative embodiments of network node 860 may include additional components beyond those shown in FIG. 8 that may be responsible for providing certain aspects of the network node's functionality, including any of the functionality described herein and/or any functionality necessary to support the subject matter described herein. For example, network node 860 may include user interface equipment to allow input of information into network node 860 and to allow output of information from network node 860. This may allow a user to perform diagnostic, maintenance, repair, and other administrative functions for network node 860.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 810 includes antenna 811, interface 814, processing circuitry 820, device readable medium 830, user interface equipment 832, auxiliary equipment 834, power source 836 and power circuitry 837. WD 810 may include multiple sets of one or more of the illustrated components for different wireless technologies supported by WD 810, such as, for example, GSM, WCDMA, LTE, NR, WiFi, WiMAX, or Bluetooth wireless technologies, just to mention a few. These wireless technologies may be integrated into the same or different chips or set of chips as other components within WD 810.

Antenna 811 may include one or more antennas or antenna arrays, configured to send and/or receive wireless signals, and is connected to interface 814. In certain alternative embodiments, antenna 811 may be separate from WD 810 and be connectable to WD 810 through an interface or port. Antenna 811, interface 814, and/or processing circuitry 820 may be configured to perform any receiving or transmitting operations described herein as being performed by a WD. Any information, data and/or signals may be received from a network node and/or another WD. In some embodiments, radio front end circuitry and/or antenna 811 may be considered an interface.

As illustrated, interface 814 comprises radio front end circuitry 812 and antenna 811. Radio front end circuitry 812 comprise one or more filters 818 and amplifiers 816. Radio front end circuitry 814 is connected to antenna 811 and processing circuitry 820, and is configured to condition signals communicated between antenna 811 and processing circuitry 820. Radio front end circuitry 812 may be coupled to or a part of antenna 811. In some embodiments, WD 810 may not include separate radio front end circuitry 812; rather, processing circuitry 820 may comprise radio front end circuitry and may be connected to antenna 811. Similarly, in some embodiments, some or all of RF transceiver circuitry 822 may be considered a part of interface 814. Radio front end circuitry 812 may receive digital data that is to be sent out to other network nodes or WDs via a wireless connection. Radio front end circuitry 812 may convert the digital data into a radio signal having the appropriate channel and bandwidth parameters using a combination of filters 818 and/or amplifiers 816. The radio signal may then be transmitted via antenna 811. Similarly, when receiving data, antenna 811 may collect radio signals which are then converted into digital data by radio front end circuitry 812. The digital data may be passed to processing circuitry 820. In other embodiments, the interface may comprise different components and/or different combinations of components.

Processing circuitry 820 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 810 components, such as device readable medium 830, WD 810 functionality. Such functionality may include providing any of the various wireless features or benefits discussed herein. For example, processing circuitry 820 may execute instructions stored in device readable medium 830 or in memory within processing circuitry 820 to provide the functionality disclosed herein.

As illustrated, processing circuitry 820 includes one or more of RF transceiver circuitry 822, baseband processing circuitry 824, and application processing circuitry 826. In other embodiments, the processing circuitry may comprise different components and/or different combinations of components. In certain embodiments processing circuitry 820 of WD 810 may comprise a SOC. In some embodiments, RF transceiver circuitry 822, baseband processing circuitry 824, and application processing circuitry 826 may be on separate chips or sets of chips. In alternative embodiments, part or all of baseband processing circuitry 824 and application processing circuitry 826 may be combined into one chip or set of chips, and RF transceiver circuitry 822 may be on a separate chip or set of chips. In still alternative embodiments, part or all of RF transceiver circuitry 822 and baseband processing circuitry 824 may be on the same chip or set of chips, and application processing circuitry 826 may be on a separate chip or set of chips. In yet other alternative embodiments, part or all of RF transceiver circuitry 822, baseband processing circuitry 824, and application processing circuitry 826 may be combined in the same chip or set of chips. In some embodiments, RF transceiver circuitry 822 may be a part of interface 814. RF transceiver circuitry 822 may condition RF signals for processing circuitry 820.

In certain embodiments, some or all of the functionality described herein as being performed by a WD may be provided by processing circuitry 820 executing instructions stored on device readable medium 830, which in certain embodiments may be a computer-readable storage medium. In alternative embodiments, some or all of the functionality may be provided by processing circuitry 820 without executing instructions stored on a separate or discrete device readable storage medium, such as in a hard-wired manner. In any of those particular embodiments, whether executing instructions stored on a device readable storage medium or not, processing circuitry 820 can be configured to perform the described functionality. The benefits provided by such functionality are not limited to processing circuitry 820 alone or to other components of WD 810, but are enjoyed by WD 810 as a whole, and/or by end users and the wireless network generally.

Processing circuitry 820 may be configured to perform any determining, calculating, or similar operations (e.g., certain obtaining operations) described herein as being performed by a WD. These operations, as performed by processing circuitry 820, may include processing information obtained by processing circuitry 820 by, for example, converting the obtained information into other information, comparing the obtained information or converted information to information stored by WD 810, and/or performing one or more operations based on the obtained information or converted information, and as a result of said processing making a determination.

Device readable medium 830 may be operable to store a computer program, software, an application including one or more of logic, rules, code, tables, etc. and/or other instructions capable of being executed by processing circuitry 820. Device readable medium 830 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 820. In some embodiments, processing circuitry 820 and device readable medium 830 may be considered to be integrated.

User interface equipment 832 may provide components that allow for a human user to interact with WD 810. Such interaction may be of many forms, such as visual, audial, tactile, etc. User interface equipment 832 may be operable to produce output to the user and to allow the user to provide input to WD 810. The type of interaction may vary depending on the type of user interface equipment 832 installed in WD 810. For example, if WD 810 is a smart phone, the interaction may be via a touch screen; if WD 810 is a smart meter, the interaction may be through a screen that provides usage (e.g., the number of gallons used) or a speaker that provides an audible alert (e.g., if smoke is detected). User interface equipment 832 may include input interfaces, devices and circuits, and output interfaces, devices and circuits. User interface equipment 832 is configured to allow input of information into WD 810, and is connected to processing circuitry 820 to allow processing circuitry 820 to process the input information. User interface equipment 832 may include, for example, a microphone, a proximity or other sensor, keys/buttons, a touch display, one or more cameras, a USB port, or other input circuitry. User interface equipment 832 is also configured to allow output of information from WD 810, and to allow processing circuitry 820 to output information from WD 810. User interface equipment 832 may include, for example, a speaker, a display, vibrating circuitry, a USB port, a headphone interface, or other output circuitry. Using one or more input and output interfaces, devices, and circuits, of user interface equipment 832, WD 810 may communicate with end users and/or the wireless network, and allow them to benefit from the functionality described herein.

Auxiliary equipment 834 is operable to provide more specific functionality which may not be generally performed by WDs. This may comprise specialized sensors for doing measurements for various purposes, interfaces for additional types of communication such as wired communications etc. The inclusion and type of components of auxiliary equipment 834 may vary depending on the embodiment and/or scenario.

Power source 836 may, in some embodiments, be in the form of a battery or battery pack. Other types of power sources, such as an external power source (e.g., an electricity outlet), photovoltaic devices or power cells, may also be used. WD 810 may further comprise power circuitry 837 for delivering power from power source 836 to the various parts of WD 810 which need power from power source 836 to carry out any functionality described or indicated herein. Power circuitry 837 may in certain embodiments comprise power management circuitry. Power circuitry 837 may additionally or alternatively be operable to receive power from an external power source; in which case WD 810 may be connectable to the external power source (such as an electricity outlet) via input circuitry or an interface such as an electrical power cable. Power circuitry 837 may also in certain embodiments be operable to deliver power from an external power source to power source 836. This may be, for example, for the charging of power source 836. Power circuitry 837 may perform any formatting, converting, or other modification to the power from power source 836 to make the power suitable for the respective components of WD 810 to which power is supplied.

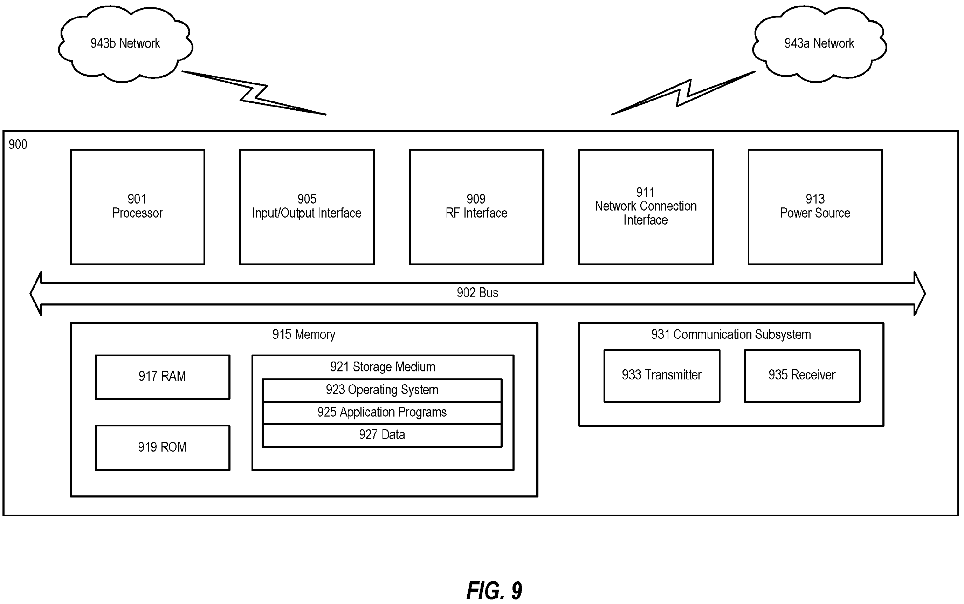

FIG. 9 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 9200 may be any UE identified by the 3^{rd} Generation Partnership Project (3GPP), including a NB-IoT UE, a machine type communication (MTC) UE, and/or an enhanced MTC (eMTC) UE. UE 900, as illustrated in FIG. 9, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIG. 9 is a UE, the components discussed herein are equally applicable to a WD, and vice-versa.

In FIG. 9, UE 900 includes processing circuitry 901 that is operatively coupled to input/output interface 905, radio frequency (RF) interface 909, network connection interface 911, memory 915 including random access memory (RAM) 917, read-only memory (ROM) 919, and storage medium 921 or the like, communication subsystem 931, power source 933, and/or any other component, or any combination thereof. Storage medium 921 includes operating system 923, application program 925, and data 927. In other embodiments, storage medium 921 may include other similar types of information. Certain UEs may utilize all of the components shown in FIG. 9, or only a subset of the components. The level of integration between the components may vary from one UE to another UE. Further, certain UEs may contain multiple instances of a component, such as multiple processors, memories, transceivers, transmitters, receivers, etc.

In FIG. 9, processing circuitry 901 may be configured to process computer instructions and data. Processing circuitry 901 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 901 may include two central processing units (CPUs). Data may be information in a form suitable for use by a computer.

In the depicted embodiment, input/output interface 905 may be configured to provide a communication interface to an input device, output device, or input and output device. UE 900 may be configured to use an output device via input/output interface 905. An output device may use the same type of interface port as an input device. For example, a USB port may be used to provide input to and output from UE 900. The output device may be a speaker, a sound card, a video card, a display, a monitor, a printer, an actuator, an emitter, a smartcard, another output device, or any combination thereof. UE 900 may be configured to use an input device via input/output interface 905 to allow a user to capture information into UE 900. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIG. 9, RF interface 909 may be configured to provide a communication interface to RF components such as a transmitter, a receiver, and an antenna. Network connection interface 911 may be configured to provide a communication interface to network 943a. Network 943a may encompass wired and/or wireless networks such as a local-area network (LAN), a wide-area network (WAN), a computer network, a wireless network, a telecommunications network, another like network or any combination thereof. For example, network 943a may comprise a Wi-Fi network. Network connection interface 911 may be configured to include a receiver and a transmitter interface used to communicate with one or more other devices over a communication network according to one or more communication protocols, such as Ethernet, TCP/IP, SONET, ATM, or the like. Network connection interface 911 may implement receiver and transmitter functionality appropriate to the communication network links (e.g., optical, electrical, and the like). The transmitter and receiver functions may share circuit components, software or firmware, or alternatively may be implemented separately.

RAM 917 may be configured to interface via bus 902 to processing circuitry 901 to provide storage or caching of data or computer instructions during the execution of software programs such as the operating system, application programs, and device drivers. ROM 919 may be configured to provide computer instructions or data to processing circuitry 901. For example, ROM 919 may be configured to store invariant low-level system code or data for basic system functions such as basic input and output (I/O), startup, or reception of keystrokes from a keyboard that are stored in a non-volatile memory. Storage medium 921 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 921 may be configured to include operating system 923, application program 925 such as a web browser application, a widget or gadget engine or another application, and data file 927. Storage medium 921 may store, for use by UE 900, any of a variety of various operating systems or combinations of operating systems.

Storage medium 921 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 921 may allow UE 900 to access computer-executable instructions, application programs or the like, stored on transitory or non-transitory memory media, to off-load data, or to upload data. An article of manufacture, such as one utilizing a communication system may be tangibly embodied in storage medium 921, which may comprise a device readable medium.

In FIG. 9, processing circuitry 901 may be configured to communicate with network 943b using communication subsystem 931. Network 943a and network 943b may be the same network or networks or different network or networks. Communication subsystem 931 may be configured to include one or more transceivers used to communicate with network 943b. For example, communication subsystem 931 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 933 and/or receiver 935 to implement transmitter or receiver functionality, respectively, appropriate to the RAN links (e.g., frequency allocations and the like). Further, transmitter 933 and receiver 935 of each transceiver may share circuit components, software or firmware, or alternatively may be implemented separately.

In the illustrated embodiment, the communication functions of communication subsystem 931 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 931 may include cellular communication, Wi-Fi communication, Bluetooth communication, and GPS communication. Network 943b may encompass wired and/or wireless networks such as a local-area network (LAN), a wide-area network (WAN), a computer network, a wireless network, a telecommunications network, another like network or any combination thereof. For example, network 943b may be a cellular network, a Wi-Fi network, and/or a near-field network. Power source 913 may be configured to provide alternating current (AC) or direct current (DC) power to components of UE 900.

The features, benefits and/or functions described herein may be implemented in one of the components of UE 900 or partitioned across multiple components of UE 900. Further, the features, benefits, and/or functions described herein may be implemented in any combination of hardware, software or firmware. In one example, communication subsystem 931 may be configured to include any of the components described herein. Further, processing circuitry 901 may be configured to communicate with any of such components over bus 902. In another example, any of such components may be represented by program instructions stored in memory that when executed by processing circuitry 901 perform the corresponding functions described herein. In another example, the functionality of any of such components may be partitioned between processing circuitry 901 and communication subsystem 931. In another example, the non-computationally intensive functions of any of such components may be implemented in software or firmware and the computationally intensive functions may be implemented in hardware.

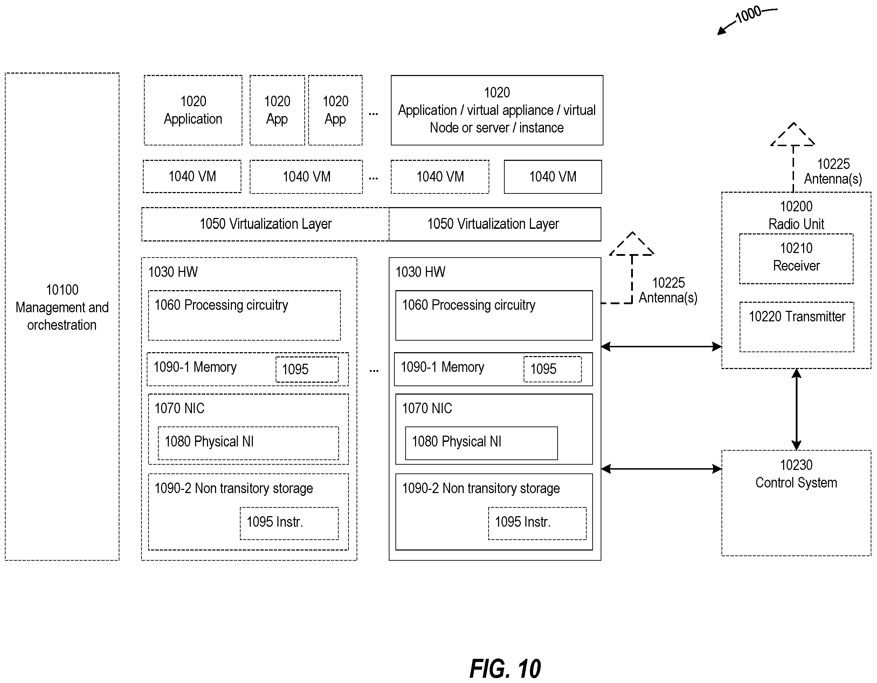

FIG. 10 is a schematic block diagram illustrating a virtualization environment 1000 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1000 hosted by one or more of hardware nodes 1030. Further, in embodiments in which the virtual node is not a radio access node or does not require radio connectivity (e.g., a core network node), then the network node may be entirely virtualized.

The functions may be implemented by one or more applications 1020 (which may alternatively be called software instances, virtual appliances, network functions, virtual nodes, virtual network functions, etc.) operative to implement some of the features, functions, and/or benefits of some of the embodiments disclosed herein. Applications 1020 are run in virtualization environment 1000 which provides hardware 1030 comprising processing circuitry 1060 and memory 1090. Memory 1090 contains instructions 1095 executable by processing circuitry 1060 whereby application 1020 is operative to provide one or more of the features, benefits, and/or functions disclosed herein.

Virtualization environment 1000, comprises general-purpose or special-purpose network hardware devices 1030 comprising a set of one or more processors or processing circuitry 1060, which may be commercial off-the-shelf (COTS) processors, dedicated Application Specific Integrated Circuits (ASICs), or any other type of processing circuitry including digital or analog hardware components or special purpose processors. Each hardware device may comprise memory 1090-1 which may be non-persistent memory for temporarily storing instructions 1095 or software executed by processing circuitry 1060. Each hardware device may comprise one or more network interface controllers (NICs) 1070, also known as network interface cards, which include physical network interface 1080. Each hardware device may also include non-transitory, persistent, machine-readable storage media 1090-2 having stored therein software 1095 and/or instructions executable by processing circuitry 1060. Software 1095 may include any type of software including software for instantiating one or more virtualization layers 1050 (also referred to as hypervisors), software to execute virtual machines 1040 as well as software allowing it to execute functions, features and/or benefits described in relation with some embodiments described herein.

Virtual machines 1040, comprise virtual processing, virtual memory, virtual networking or interface and virtual storage, and may be run by a corresponding virtualization layer 1050 or hypervisor. Different embodiments of the instance of virtual appliance 1020 may be implemented on one or more of virtual machines 1040, and the implementations may be made in different ways.

During operation, processing circuitry 1060 executes software 1095 to instantiate the hypervisor or virtualization layer 1050, which may sometimes be referred to as a virtual machine monitor (VMM). Virtualization layer 1050 may present a virtual operating platform that appears like networking hardware to virtual machine 1040.

As shown in FIG. 10, hardware 1030 may be a standalone network node with generic or specific components. Hardware 1030 may comprise antenna 10225 and may implement some functions via virtualization. Alternatively, hardware 1030 may be part of a larger cluster of hardware (e.g. such as in a data center or customer premise equipment (CPE)) where many hardware nodes work together and are managed via management and orchestration (MANO) 10100, which, among others, oversees lifecycle management of applications 1020.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1040 may be a software implementation of a physical machine that runs programs as if they were executing on a physical, non-virtualized machine. Each of virtual machines 1040, and that part of hardware 1030 that executes that virtual machine, be it hardware dedicated to that virtual machine and/or hardware shared by that virtual machine with others of the virtual machines 1040, forms a separate virtual network elements (VNE).

Still in the context of NFV, Virtual Network Function (VNF) is responsible for handling specific network functions that run in one or more virtual machines 1040 on top of hardware networking infrastructure 1030 and corresponds to application 1020 in FIG. 10.

In some embodiments, one or more radio units 10200 that each include one or more transmitters 10220 and one or more receivers 10210 may be coupled to one or more antennas 10225. Radio units 10200 may communicate directly with hardware nodes 1030 via one or more appropriate network interfaces and may be used in combination with the virtual components to provide a virtual node with radio capabilities, such as a radio access node or a base station.

In some embodiments, some signalling can be effected with the use of control system 10230 which may alternatively be used for communication between the hardware nodes 1030 and radio units 10200.

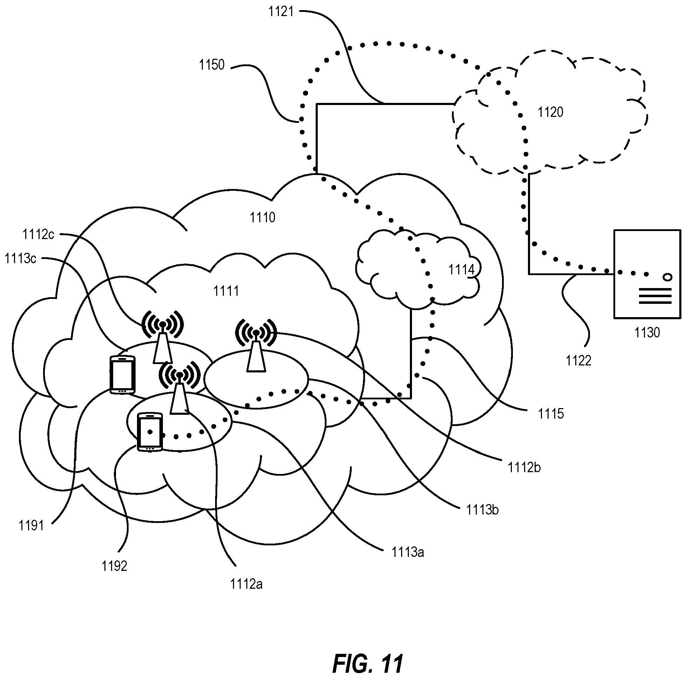

With reference to FIG. 11, in accordance with an embodiment, a communication system includes telecommunication network 1110, such as a 3GPP-type cellular network, which comprises access network 1111, such as a radio access network, and core network 1114. Access network 1111 comprises a plurality of base stations 1112a, 1112b, 1112c, such as NBs, eNBs, gNBs or other types of wireless access points, each defining a corresponding coverage area 1113a, 1113b, 1113c. Each base station 1112a, 1112b, 1112c is connectable to core network 1114 over a wired or wireless connection 1115. A first UE 1191 located in coverage area 1113c is configured to wirelessly connect to, or be paged by, the corresponding base station 1112c. A second UE 1192 in coverage area 1113a is wirelessly connectable to the corresponding base station 1112a. While a plurality of UEs 1191, 1192 are illustrated in this example, the disclosed embodiments are equally applicable to a situation where a sole UE is in the coverage area or where a sole UE is connecting to the corresponding base station 1112.

Telecommunication network 1110 is itself connected to host computer 1130, which may be embodied in the hardware and/or software of a standalone server, a cloud-implemented server, a distributed server or as processing resources in a server farm. Host computer 1130 may be under the ownership or control of a service provider, or may be operated by the service provider or on behalf of the service provider. Connections 1121 and 1122 between telecommunication network 1110 and host computer 1130 may extend directly from core network 1114 to host computer 1130 or may go via an optional intermediate network 1120. Intermediate network 1120 may be one of, or a combination of more than one of, a public, private or hosted network; intermediate network 1120, if any, may be a backbone network or the Internet; in particular, intermediate network 1120 may comprise two or more sub-networks (not shown).

The communication system of FIG. 11 as a whole enables connectivity between the connected UEs 1191, 1192 and host computer 1130. The connectivity may be described as an over-the-top (OTT) connection 1150. Host computer 1130 and the connected UEs 1191, 1192 are configured to communicate data and/or signaling via OTT connection 1150, using access network 1111, core network 1114, any intermediate network 1120 and possible further infrastructure (not shown) as intermediaries. OTT connection 1150 may be transparent in the sense that the participating communication devices through which OTT connection 1150 passes are unaware of routing of uplink and downlink communications. For example, base station 1112 may not or need not be informed about the past routing of an incoming downlink communication with data originating from host computer 1130 to be forwarded (e.g., handed over) to a connected UE 1191. Similarly, base station 1112 need not be aware of the future routing of an outgoing uplink communication originating from the UE 1191 towards the host computer 1130.

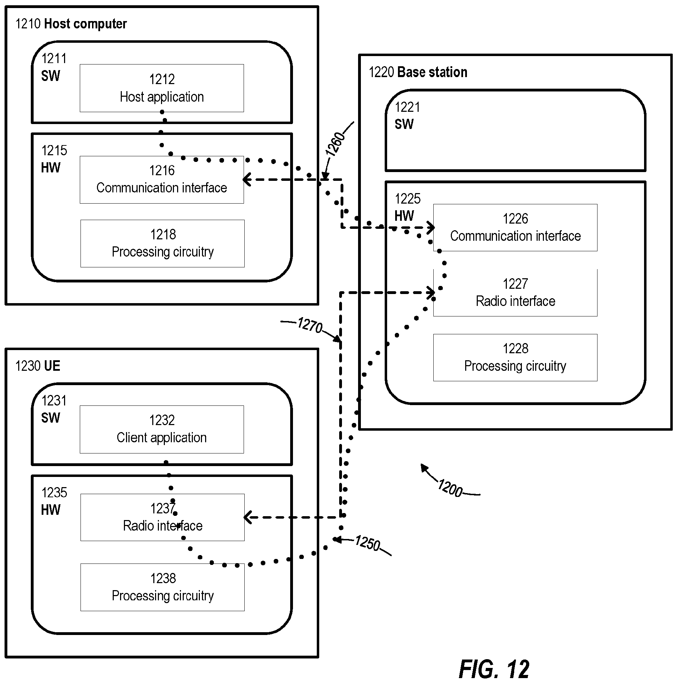

Example implementations, in accordance with an embodiment, of the UE, base station and host computer discussed in the preceding paragraphs will now be described with reference to FIG. 12. In communication system 1200, host computer 1210 comprises hardware 1215 including communication interface 1216 configured to set up and maintain a wired or wireless connection with an interface of a different communication device of communication system 1200. Host computer 1210 further comprises processing circuitry 1218, which may have storage and/or processing capabilities. In particular, processing circuitry 1218 may comprise one or more programmable processors, application-specific integrated circuits, field programmable gate arrays or combinations of these (not shown) adapted to execute instructions. Host computer 1210 further comprises software 1211, which is stored in or accessible by host computer 1210 and executable by processing circuitry 1218. Software 1211 includes host application 1212. Host application 1212 may be operable to provide a service to a remote user, such as UE 1230 connecting via OTT connection 1250 terminating at UE 1230 and host computer 1210. In providing the service to the remote user, host application 1212 may provide user data which is transmitted using OTT connection 1250.

Communication system 1200 further includes base station 1220 provided in a telecommunication system and comprising hardware 1225 enabling it to communicate with host computer 1210 and with UE 1230. Hardware 1225 may include communication interface 1226 for setting up and maintaining a wired or wireless connection with an interface of a different communication device of communication system 1200, as well as radio interface 1227 for setting up and maintaining at least wireless connection 1270 with UE 1230 located in a coverage area (not shown in FIG. 12) served by base station 1220. Communication interface 1226 may be configured to facilitate connection 1260 to host computer 1210. Connection 1260 may be direct or it may pass through a core network (not shown in FIG. 12) of the telecommunication system and/or through one or more intermediate networks outside the telecommunication system. In the embodiment shown, hardware 1225 of base station 1220 further includes processing circuitry 1228, which may comprise one or more programmable processors, application-specific integrated circuits, field programmable gate arrays or combinations of these (not shown) adapted to execute instructions. Base station 1220 further has software 1221 stored internally or accessible via an external connection.

Communication system 1200 further includes UE 1230 already referred to. Its hardware 1235 may include radio interface 1237 configured to set up and maintain wireless connection 1270 with a base station serving a coverage area in which UE 1230 is currently located. Hardware 1235 of UE 1230 further includes processing circuitry 1238, which may comprise one or more programmable processors, application-specific integrated circuits, field programmable gate arrays or combinations of these (not shown) adapted to execute instructions. UE 1230 further comprises software 1231, which is stored in or accessible by UE 1230 and executable by processing circuitry 1238. Software 1231 includes client application 1232. Client application 1232 may be operable to provide a service to a human or non-human user via UE 1230, with the support of host computer 1210. In host computer 1210, an executing host application 1212 may communicate with the executing client application 1232 via OTT connection 1250 terminating at UE 1230 and host computer 1210. In providing the service to the user, client application 1232 may receive request data from host application 1212 and provide user data in response to the request data. OTT connection 1250 may transfer both the request data and the user data. Client application 1232 may interact with the user to generate the user data that it provides.

It is noted that host computer 1210, base station 1220 and UE 1230 illustrated in FIG. 12 may be similar or identical to host computer 1130, one of base stations 1112a, 1112b, 1112c and one of UEs 1191, 1192 of FIG. 11, respectively. This is to say, the inner workings of these entities may be as shown in FIG. 12 and independently, the surrounding network topology may be that of FIG. 11.

In FIG. 12, OTT connection 1250 has been drawn abstractly to illustrate the communication between host computer 1210 and UE 1230 via base station 1220, without explicit reference to any intermediary devices and the precise routing of messages via these devices. Network infrastructure may determine the routing, which it may be configured to hide from UE 1230 or from the service provider operating host computer 1210, or both. While OTT connection 1250 is active, the network infrastructure may further take decisions by which it dynamically changes the routing (e.g., on the basis of load balancing consideration or reconfiguration of the network).

Wireless connection 1270 between UE 1230 and base station 1220 is in accordance with the teachings of the embodiments described throughout this disclosure. One or more of the various embodiments improve the performance of OTT services provided to UE 1230 using OTT connection 1250, in which wireless connection 1270 forms the last segment. More precisely, the teachings of these embodiments may improve the latency, and data rates available to the UE 1230 by facilitating communication between network nodes over wireless backhauls links as described herein. These improvements thereby provide benefits such as reduced user waiting time, improved responsiveness, and increased through-put for any OTT services.

A measurement procedure may be provided for the purpose of monitoring data rate, latency and other factors on which the one or more embodiments improve. There may further be an optional network functionality for reconfiguring OTT connection 1250 between host computer 1210 and UE 1230, in response to variations in the measurement results. The measurement procedure and/or the network functionality for reconfiguring OTT connection 1250 may be implemented in software 1211 and hardware 1215 of host computer 1210 or in software 1231 and hardware 1235 of UE 1230, or both. In embodiments, sensors (not shown) may be deployed in or in association with communication devices through which OTT connection 1250 passes; the sensors may participate in the measurement procedure by supplying values of the monitored quantities exemplified above, or supplying values of other physical quantities from which software 1211, 1231 may compute or estimate the monitored quantities. The reconfiguring of OTT connection 1250 may include message format, retransmission settings, preferred routing etc.; the reconfiguring need not affect base station 1220, and it may be unknown or imperceptible to base station 1220. Such procedures and functionalities may be known and practiced in the art. In certain embodiments, measurements may involve proprietary UE signaling facilitating host computer 1210's measurements of throughput, propagation times, latency and the like. The measurements may be implemented in that software 1211 and 1231 causes messages to be transmitted, in particular empty or 'dummy' messages, using OTT connection 1250 while it monitors propagation times, errors etc.

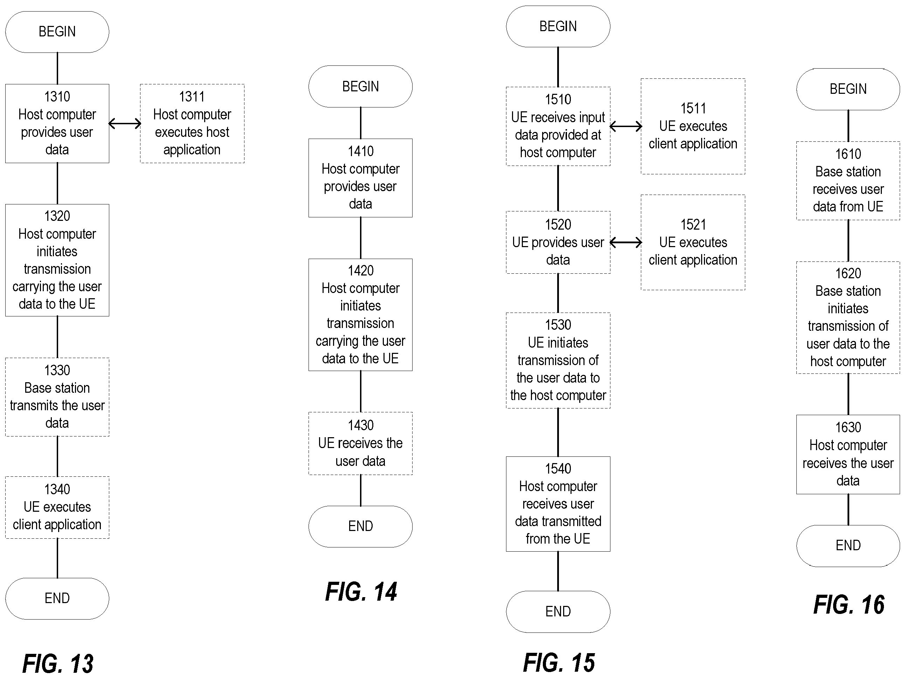

FIG. 13 is a flowchart illustrating a method implemented in a communication system, in accordance with one embodiment. The communication system includes a host computer, a base station and a UE which may be those described with reference to FIGS. 11 and 12. For simplicity of the present disclosure, only drawing references to FIG. 13 will be included in this section. In step 1310, the host computer provides user data. In substep 1311 (which may be optional) of step 1310, the host computer provides the user data by executing a host application. In step 1320, the host computer initiates a transmission carrying the user data to the UE. In step 1330 (which may be optional), the base station transmits to the UE the user data which was carried in the transmission that the host computer initiated, in accordance with the teachings of the embodiments described throughout this disclosure. In step 1340 (which may also be optional), the UE executes a client application associated with the host application executed by the host computer.

FIG. 14 is a flowchart illustrating a method implemented in a communication system, in accordance with one embodiment. The communication system includes a host computer, a base station and a UE which may be those described with reference to FIGS. 11 and 12. For simplicity of the present disclosure, only drawing references to FIG. 14 will be included in this section. In step 1410 of the method, the host computer provides user data. In an optional substep (not shown) the host computer provides the user data by executing a host application. In step 1420, the host computer initiates a transmission carrying the user data to the UE. The transmission may pass via the base station, in accordance with the teachings of the embodiments described throughout this disclosure. In step 1430 (which may be optional), the UE receives the user data carried in the transmission.

FIG. 15 is a flowchart illustrating a method implemented in a communication system, in accordance with one embodiment. The communication system includes a host computer, a base station and a UE which may be those described with reference to FIGS. 11 and 12. For simplicity of the present disclosure, only drawing references to FIG. 15 will be included in this section. In step 1510 (which may be optional), the UE receives input data provided by the host computer. Additionally or alternatively, in step 1520, the UE provides user data. In substep 1521 (which may be optional) of step 1520, the UE provides the user data by executing a client application. In substep 1511 (which may be optional) of step 1510, the UE executes a client application which provides the user data in reaction to the received input data provided by the host computer. In providing the user data, the executed client application may further consider user input received from the user. Regardless of the specific manner in which the user data was provided, the UE initiates, in substep 1530 (which may be optional), transmission of the user data to the host computer. In step 1540 of the method, the host computer receives the user data transmitted from the UE, in accordance with the teachings of the embodiments described throughout this disclosure.

FIG. 16 is a flowchart illustrating a method implemented in a communication system, in accordance with one embodiment. The communication system includes a host computer, a base station and a UE which may be those described with reference to FIGS. 11 and 12. For simplicity of the present disclosure, only drawing references to FIG. 16 will be included in this section. In step 1610 (which may be optional), in accordance with the teachings of the embodiments described throughout this disclosure, the base station receives user data from the UE. In step 1620 (which may be optional), the base station initiates transmission of the received user data to the host computer. In step 1630 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

At least some of the following abbreviations may be used in this disclosure. If there is an inconsistency between abbreviations, preference should be given to how it is used above. If listed multiple times below, the first listing should be preferred over any subsequent listing(s).
CN Core Network
CU Centralized Unit
CU-CP CU Control Plane
CU-UP CU User Plane
DFTS-OFDM Discrete Fourier Transform (DFT) Spread OFDM
DL Downlink
DU Distributed Unit
eNB evolved Node B (a base station supporting the LTE air interface for communication with UEs)
EN-DC E-UTRAN-NR Dual Connectivity
EPC Evolved Packet Core
F1 Interface between a gNB-CU and a gNB-DU
F1-AP F1 Application Protocol
F1* modified form of F1 (within the IAB context; details of F1* remain to be specified; protocol translation between F1* and F1 in case the IAB-donor is split is studied)
F1*-U modified form of F1 interface - User Plane
gNB a base station supporting the NR air interface for communication with UEs
GTP-U GPRS Tunneling Protocol - User Plane
IAB Integrated Access and backhaul
IP Internet Protocol
L1 Layer one
L2 Layer 2
L-GW LIPA Gateway (LIPA - Local IP Access)
LTE Long Term Evolution
MAC Medium Access Control
MCS Modulation and Coding Scheme
N4 Interface between SMF (Session Management Function) and UPF (User Plane Function) in the 5GC
NAS Non Access Stratum
NG (logical) Interface between an gNB and 5GC (i.e. NG-RAN and 5G core network)
NR New Radio
NSA Non-Standalone
OAM Operation and Maintenance
OFDM Orthogonal Frequency-Division Multiplexing
PDCP Packet Data Convergence Protocol
PDN Packet Data Network
PDU Protocol Data Unit
PHY Physical layer
P/S-GW S-GW: Serving Gateway (user plane node connecting EPC and LTE RAN); P-GW (PDN-GW): Packet Data Network Gateway (connects EPC to internet)
RLC Radio Link Control
RRC Radio Resource Control
Rx Receiver
S1 Interface between an eNB and EPC (i.e. RAN and core network)
S5 Interface between P-GW and S-GW
SDAP Service Data Adaptation Protocol
SNR Signal-to-Noise Ratio
Tx Transmitter
UDP User Datagram Protocol
UE User Equipment
UL Uplink
UPF User Plane Function
Uu The radio interface from the eNodeB to the UE (also known as the LTE-Uu interface)
X2 Interface between two eNBs
Xn Interface between two gNBs or between an eNB and gNB in non-EN-DC cases
1x RTT CDMA2000 1x Radio Transmission Technology
3GPP3rd Generation Partnership Project
5G 5th Generation
ABS Almost Blank Subframe
ARQ Automatic Repeat Request
AWGN Additive White Gaussian Noise
BCCH Broadcast Control Channel
BCH Broadcast Channel
CA Carrier Aggregation
CC Carrier Component
CCCH SDU Common Control Channel SDU
CDMA Code Division Multiplexing Access
CGI Cell Global Identifier
CIR Channel Impulse Response
CP Cyclic Prefix
CPICH Common Pilot Channel
CPICH Ec/No CPICH Received energy per chip divided by the power density in the band
CQI Channel Quality information
C-RNTI Cell RNTI
CSI Channel State Information
DCCH Dedicated Control Channel
DL Downlink
DM Demodulation
DMRS Demodulation Reference Signal
DRX Discontinuous Reception
DTX Discontinuous Transmission
DTCH Dedicated Traffic Channel
DUT Device Under Test
E-CID Enhanced Cell-ID (positioning method)
E-SMLC Evolved-Serving Mobile Location Centre
ECGIEvolved CGI
eNB E-UTRAN NodeB
ePDCCH enhanced Physical Downlink Control Channel
E-SMLC evolved Serving Mobile Location Center
E-UTRA Evolved UTRA
E-UTRAN Evolved UTRAN
FDD Frequency Division Duplex
FFS For Further Study
GERAN GSM EDGE Radio Access Network
gNB Base station in NR
GNSS Global Navigation Satellite System
GSM Global System for Mobile communication
HARQ Hybrid Automatic Repeat Request
HO Handover
HSPA High Speed Packet Access
HRPD High Rate Packet Data
LOS Line of Sight
LPP LTE Positioning Protocol
LTE Long-Term Evolution
MAC Medium Access Control
MBMS Multimedia Broadcast Multicast Services
MBSFN Multimedia Broadcast multicast service Single Frequency Network
MBSFN ABS MBSFN Almost Blank Subframe
MDT Minimization of Drive Tests
MIB Master Information Block
MME Mobility Management Entity
MSC Mobile Switching Center
NPDCCH Narrowband Physical Downlink Control Channel
NR New Radio
OCNG OFDMA Channel Noise Generator
OFDM Orthogonal Frequency Division Multiplexing
OFDMA Orthogonal Frequency Division Multiple Access
OSS Operations Support System
OTDOA Observed Time Difference of Arrival
O&M Operation and Maintenance
PBCH Physical Broadcast Channel
P-CCPCH Primary Common Control Physical Channel
PCell Primary Cell
PCFICH Physical Control Format Indicator Channel
PDCCH Physical Downlink Control Channel
PDP Profile Delay Profile
PDSCH Physical Downlink Shared Channel
PGW Packet Gateway
PHICH Physical Hybrid-ARQ Indicator Channel
PLMN Public Land Mobile Network
PMI Precoder Matrix Indicator
PRACH Physical Random Access Channel
PRS Positioning Reference Signal
PSS Primary Synchronization Signal
PUCCH Physical Uplink Control Channel
PUSCH Physical Uplink Shared Channel
RACH Random Access Channel
QAMQuadrature Amplitude Modulation
RAN Radio Access Network
RAT Radio Access Technology
RLM Radio Link Management
RNC Radio Network Controller
RNTIRadio Network Temporary Identifier
RRC Radio Resource Control
RRM Radio Resource Management
RS Reference Signal
RSCP Received Signal Code Power
RSRP Reference Symbol Received Power OR
Reference Signal Received Power
RSRQ Reference Signal Received Quality OR
Reference Symbol Received Quality
RSSI Received Signal Strength Indicator
RSTD Reference Signal Time Difference
SCH Synchronization Channel
SCell Secondary Cell
SDU Service Data Unit
SFN System Frame Number
SGW Serving Gateway
SI System Information
SIB System Information Block
SNR Signal to Noise Ratio
SON Self Optimized Network
SS Synchronization Signal
SSS Secondary Synchronization Signal
TDD Time Division Duplex
TDOA Time Difference of Arrival
TOA Time of Arrival
TSS Tertiary Synchronization Signal
TTI Transmission Time Interval
UE User Equipment
UL Uplink
UMTS Universal Mobile Telecommunication System
USIM Universal Subscriber Identity Module
UTDOA Uplink Time Difference of Arrival
UTRA Universal Terrestrial Radio Access
UTRAN Universal Terrestrial Radio Access Network
WCDMA Wide CDMA
WLAN Wide Local Area Network

## Claims

1. A method (700a) performed by an IAB node for receiving soft resource reservation or allocation from a parent node, the method comprising:
sending (702) a request for a soft resource to a parent node;
if grant or denial not received from the parent node before a maximum number of sent requests is reached, sending a plurality of resource requests for the same resource/s to the parent node,
suspending the sending of the plurality of requests to a parent node for a predetermined or a determined amount of time;
receiving (706) a grant or denial of a soft resource from the parent node;
when a grant is received, determining (708) whether the IAB node is eligible for the granted soft resource; and
utilizing (710) the soft resource to communication data with the parent node via a backhaul link or with a user equipment via an access link.

2. The method (700a) of the claim 1, wherein the parent node is in communication with a core network via a wireline connection

3. The method (700a) of any of claims 1-2, wherein the IAB node is further configured for communication with a child node in accordance with the granted soft resource.

4. The method (700a) of any of claims 1-3, wherein the IAB node and the parent node communicate using half-duplexed communication.

5. A method (700a) performed by a parent node for reserving soft resources for an IAB node, the method comprising:
receiving (712) a request for a soft resource sent by the IAB node;
determining (714) whether the requested resource should be granted in full, should be granted in part, or should be denied; and
sending (716) the grant or denial to the IAB node;
the method further comprising:
receiving multiple requests for the same resources from a plurality of IAB nodes,
deciding to grant said resource/s in question to one, part or all of the IAB nodes that have sent a resource request; wherein the decision to grant said resources is based on a condition that whether the IAB node is committed to receive said resources from the parent node on the parent link during a certain period of time;
sending the grant or denial to the IAB node/s based on the availability of the resources for the respective nodes, if the parent node determines to release the resource/s in question to one, some, or all of the IAB nodes that have sent a resource request.

6. The method (700a) of claim 5, wherein the method further comprising adjusting (718), by the parent node, its own usage of resources available based on the grant or denial sent to the IAB node.

7. A network node having a memory and a processing device, wherein the processing device executes instructions, stored on the memory, that cause the processor to perform any of the methods of claims 1-6.

8. A computer readable storage medium having instructions thereon that, when executed by a processing device of a network node, cause the network node to perform any of the methods of claims 1-6.

## Patentansprüche

1. Verfahren (700a), durchgeführt von einem IAB-Knoten zum Empfangen einer Reservierung oder Allokation von weichen Ressourcen von einem übergeordneten Knoten, wobei das Verfahren Folgendes umfasst:
Senden (702) einer Anfrage für eine weiche Ressource an einen übergeordneten Knoten;
wenn Gewährung oder Ablehnung von dem übergeordneten Knoten nicht empfangen wird, bevor eine Höchstzahl an gesendeten Anfragen erreicht ist, Senden einer Vielzahl von Ressourcenanfragen für die gleiche(n) Ressource(n) an den übergeordneten Knoten,
Aussetzen des Sendens der Vielzahl von Anfragen an einen übergeordneten Knoten für einen vorbestimmten oder einen bestimmten Zeitraum;
Empfangen (706) einer Gewährung oder Ablehnung einer weichen Ressource von dem übergeordneten Knoten;
wenn eine Gewährung empfangen wird, Bestimmen (708), ob der IAB-Knoten für die gewährte weiche Ressource geeignet ist; und
Nutzen (710) der weichen Ressource zu Kommunikationsdaten mit dem übergeordneten Knoten über eine Backhaul-Verknüpfung oder mit einer Benutzerausrüstung über eine Zugriffsverknüpfung.

2. Verfahren (700a) nach Anspruch 1, wobei der übergeordnete Knoten über eine Wireline-Verbindung in Kommunikation mit einem Kernnetzwerk steht.

3. Verfahren (700a) nach einem der Ansprüche 1-2, wobei der IAB-Knoten ferner zur Kommunikation mit einem nachgeordneten Knoten gemäß der gewährten weichen Ressource konfiguriert ist.

4. Verfahren (700a) nach einem der Ansprüche 1-3, wobei der IAB-Knoten und der übergeordnete Knoten unter Verwendung von halbduplexierter Kommunikation kommunizieren.

5. Verfahren (700a), durchgeführt von einem übergeordneten Knoten zum Reservieren von weichen Ressourcen für einen IAB-Knoten, wobei das Verfahren Folgendes umfasst:
Empfangen (712) einer Anfrage für eine weiche Ressource, die durch den IAB-Knoten gesendet wurde;
Bestimmen (714), ob die angefragte Ressource vollständig zu gewähren ist, in Teilen zu gewähren ist oder abzulehnen ist; und
Senden (716) der Gewährung oder Ablehnung an den IAB-Knoten;
wobei das Verfahren ferner Folgendes umfasst:
Empfangen mehrfacher Anfragen für die gleichen Ressourcen von einer Vielzahl von IAB-Knoten,
Entscheiden, die betreffende(n) Ressource(n) einem, einigen oder allen der IAB-Knoten zu gewähren, die eine Ressourcenanfrage gesendet haben; wobei die Entscheidung, die Ressourcen zu gewähren, auf einer Voraussetzung basiert, dass der IAB-Knoten darauf festgelegt ist, die Ressourcen von dem übergeordneten Knoten auf der übergeordneten Verknüpfung während eines bestimmten Zeitraums zu empfangen;
Senden der Gewährung oder Ablehnung an den (die) IAB-Knoten, basierend auf der Verfügbarkeit der Ressourcen für die jeweiligen Knoten, wenn der übergeordnete Knoten bestimmt, die betreffende(n) Ressource(n) an einen, einige oder alle der IAB-Knoten freizugeben, die eine Ressourcenanfrage gesendet haben.

6. Verfahren (700a) nach Anspruch 5, wobei das Verfahren ferner ein Anpassen (718), durch den übergeordneten Knoten, seines eigenen Verbrauchs von verfügbaren Ressourcen basierend auf der Gewährung oder Ablehnung, die an den IAB-Knoten gesendet wurde, umfasst.

7. Netzwerkknoten, der einen Speicher und eine Verarbeitungsvorrichtung aufweist, wobei die Verarbeitungsvorrichtung Anweisungen ausführt, die auf dem Speicher gespeichert sind und den Prozessor dazu veranlassen, eines der Verfahren nach den Ansprüchen 1-6 durchzuführen.

8. Computerlesbares Speichermedium, das darauf Anweisungen aufweist, die, wenn sie von einer Verarbeitungsvorrichtung eines Netzwerkknotens ausgeführt werden, den Netzwerkknoten dazu veranlassen, eines der Verfahren nach den Ansprüchen 1-6 durchzuführen.

## Revendications

1. Procédé (700a), exécuté par un noeud IAB, de réception d'une réservation ou d'une allocation de ressource logicielle depuis un noeud parent, le procédé comprenant :
l'envoi (702) d'une demande de ressource logicielle à un noeud parent ;
si l'octroi ou le refus n'est pas reçu depuis le noeud parent avant qu'un nombre maximum de demandes envoyées ne soit atteint, l'envoi d'une pluralité de demandes de ressource pour la ou les mêmes ressources au noeud parent,
la suspension de l'envoi de la pluralité de demandes à un noeud parent pendant une durée prédéterminée ou déterminée ;
la réception (706) d'un octroi ou d'un refus d'une ressource logicielle depuis le noeud parent ;
lorsqu'un octroi est reçu, le fait de déterminer (708) si le noeud IAB est éligible pour la ressource logicielle octroyée ; et
l'utilisation (710) de la ressource logicielle pour communiquer des données avec le noeud parent par l'intermédiaire d'une liaison terrestre ou avec un équipement utilisateur par l'intermédiaire d'un lien d'accès.

2. Procédé (700a) selon la revendication 1, dans lequel le noeud parent est en communication avec un réseau central par l'intermédiaire d'une connexion filaire.

3. Procédé (700a) selon l'une quelconque des revendications 1 et 2, dans lequel le noeud IAB est en outre configuré pour communiquer avec un noeud enfant conformément à la ressource logicielle octroyée.

4. Procédé (700a) selon l'une quelconque des revendications 1 à 3, dans lequel le noeud IAB et le noeud parent communiquent en utilisant une communication semi-duplex.

5. Procédé (700a), exécuté par un noeud parent, de réservation de ressources logicielles pour un noeud IAB, le procédé comprenant :
la réception (712) d'une demande de ressource logicielle envoyée par le noeud IAB ;
le fait de déterminer (714) si la ressource demandée doit être octroyée en totalité, doit être octroyée en partie ou doit être refusée ; et
l'envoi (716) de l'octroi ou du refus au noeud IAB ;
le procédé comprenant en outre :
la réception de multiples demandes pour les mêmes ressources provenant d'une pluralité de noeuds IAB,
la décision d'octroyer la ou les ressources en question à l'un, à une partie ou à l'ensemble des noeuds IAB qui ont envoyé une demande de ressource ; dans lequel la décision d'octroyer lesdites ressources est basée sur une condition selon laquelle le noeud IAB s'est engagé à recevoir lesdites ressources depuis le noeud parent sur le lien parent au cours d'une certaine période ;
l'envoi de l'octroi ou du refus à ou aux noeuds IAB sur la base de la disponibilité des ressources pour les noeuds respectifs, si le noeud parent décide de libérer la ou les ressources en question pour un, plusieurs ou tous les noeuds IAB qui ont envoyé une demande de ressource.

6. Procédé (700a) selon la revendication 5, dans lequel le procédé comprend en outre l'ajustement (718), par le noeud parent, de sa propre utilisation des ressources disponibles sur la base de l'octroi ou du refus envoyé au noeud IAB.

7. Noeud de réseau présentant une mémoire et un dispositif de traitement, dans lequel le dispositif de traitement exécute des instructions, stockées dans la mémoire, qui amènent le processeur à exécuter l'un quelconque des procédés des revendications 1 à 6.

8. Support de stockage lisible par ordinateur sur lequel sont stockées des instructions qui, lorsqu'elles sont exécutées par un dispositif de traitement d'un noeud de réseau, amènent le noeud de réseau à exécuter l'un quelconque des procédés des revendications 1 à 6.
